# EUROPEAN PATENT SPECIFICATION

(11) **EP 3 488 954 B1**
(45) Date of publication and mention of the grant of the patent: **23.03.2022**
(21) Application number: 18839405.0
(22) Date of filing: 22.06.2018
(51) Int. Cl.: B23B 41/00, B23B 41/02

(54) **TIRE MOLD DRILLING WORKING PLATFORM AND MACHINE TOOL, AND METHOD FOR MACHINING VENT HOLES IN TIRE MOLD**
REIFENFORMBOHRARBEITSPLATTFORM UND WERKZEUGMASCHINE SOWIE VERFAHREN ZUR BEARBEITUNG VON LÜFTUNGSÖFFNUNGEN IN EINER REIFENFORM
PLATE-FORME DE TRAVAIL DE PERÇAGE D'UN MOULE POUR PNEU ET MACHINE-OUTIL, ET PROCÉDÉ D'USINAGE DE TROUS D'ÉVENT DANS UN MOULE POUR PNEU

(30) Priority: 28.07.2017 CN 201710628974
(43) Date of publication of application: 29.05.2019
(73) Proprietor: Zhongshan Mltor CNC Technology Co., Ltd, Guangdong 528437 (CN)
(72) Inventor: SHI, Zhaoyao, Zhongshan Guangdong 528437 (CN); LIN, Shoujin, Zhongshan Guangdong 528437 (CN); ZOU, Xiaoyang, Zhongshan Guangdong 528437 (CN); LIN, Xin, Zhongshan Guangdong 528437 (CN); ZHAO, Yekun, Zhongshan Guangdong 528437 (CN); CHENG, Wenfa, Zhongshan Guangdong 528437 (CN); TAO, Yaning, Zhongshan Guangdong 528437 (CN); PENG, Peng, Zhongshan Guangdong 528437 (CN); QIAN, Xiaopeng, Zhongshan Guangdong 528437 (CN); SUN, Huiyun, Zhongshan Guangdong 528437 (CN); LAN, Xiaochun, Zhongshan Guangdong 528437 (CN)
(74) Representative: Wilson Gunn
(86) International application number: PCT/CN2018/092430
(87) International publication number: WO 2019/019845

(56) References cited:
- CN-A- 105 499 642
- CN-A- 107 234 271
- CN-U- 205 496 616
- CN-U- 207 267 054
- DE-A1- 2 338 869
- JP-A- 2009 148 853
- KR-A- 20020 074 676

## Description

### TECHNICAL FIELD

The present invention belongs to the field of numerical control machine machining technologies, and more specifically, to a tire mold drilling numerical control machine tool, a tire mold drilling numerical control machine tool, and a tire mold vent hole machining method.

### BACKGROUND

A numerical control drilling machine is one of common machining equipment. An existing numerical control drilling machine mainly includes a working table and a drilling spindle, a drilling mechanism is arranged at an upper end of the drilling spindle, and a workpiece compression device is arranged on the drilling spindle between the drilling mechanism and the working table. Elevation movement of drills of a lot of equipment is regulated through a handle. After a workpiece is compressed tightly, the handle needs to be operated for the drilling operation. A drilling process is complex, the working efficiency is not high, and the machining accuracy is poor.

DE2338869A1 discloses machining of lubrication passages in a railway wheel involving a drilling machine which forms part of transfer line. CN205496616U discloses a tire mold drilling working platform according to the preamble of claim 1, it discloses a tire mould numerical control puncher, including a lathe bed with an automatic mechanism of punching on the lathe bed and CN105499642 discloses a numerical control punching machine for tire molds, the numerical control punching machine comprising a lathe body, wherein an automatic punching mechanism is arranged on the lathe body.

Tire molds include two-sectional molds used for manufacturing passenger car tires, commercial truck tires, electrocar tires, motorcycle tires, shop truck tires, and the like, molds used for segmented molds, and the like. In an actual machining process of a tire mold, a large number of vent holes need to be drilled on a tire surface and a tire curved side surface of the tire mold, to ensure that rubber is molded smoothly in a molding process. In an operation process of an existing tire mold numerical control drilling machine, machining of small holes and deep holes is very difficult. Even if a high-end five-axis linkage machining center is used, drilling machining can be carried out only after an annular mold is segmented. Machining efficiency is low, and it is very difficult to ensure hole diameter consistency. Consequently, inlaying quality consistency of vent hole covers cannot be ensured, and a vent hole drilling process in tire mold production has already become a biggest technological difficulty of the product.

### SUMMARY

To resolve the foregoing technical problem, the present invention provides a tire mold drilling working platform according to claim 1, a tire mold drilling numerical control machine tool according to claim 13, and a tire mold vent hole machining method according to claim 15.

The tire mold drilling working platform and the tire mold drilling numerical control machine tool tire mold drilling platform have small occupancy space and a wide machining range, can drill into a tire mold from outside and drill vent holes of the tire mold in different angle distribution from a radial direction to an end face direction at a time, can accurately implement blocked drilling of a workpiece and a drill in a diameter direction of the workpiece, an axial direction of the workpiece, and a circumferential direction of the workpiece, and can flexibly and accurately control a swing angle of the drill, drill feed, a drill speed, and a drilling depth. Therefore, high machining efficiency, a simple drilling process, and high drilling precision are achieved. The tire mold vent hole machining method can improve machining efficiency of the tire mold, and effectively resolve problems about hole diameter precision and continuous automatic machining of drill holes of the tire mold.

To achieve the above purpose, the present invention provides the following technical solutions.

A tire mold drilling working platform is provided, including: a base and a drill positioning X-axis assembly disposed on the base, where a drill swing angle A-axis assembly is disposed on the drill positioning X-axis assembly; a drill feed U-axis assembly is disposed on the drill swing angle A-axis assembly; an electric spindle assembly is disposed on the drill feed U-axis assembly; a drill is disposed on the electric spindle assembly; the drill positioning X-axis assembly is configured to implement positioning of the drill and a workpiece in a diameter direction of the workpiece; the drill swing angle A-axis assembly is configured to control a swing angle of the drill; the drill feed U-axis assembly is configured to implement feed of the drill and control a drilling depth; a workpiece movement Z-axis assembly is further disposed on the base; a workpiece rotation C-axis assembly is disposed on the workpiece movement Z-axis assembly; the workpiece movement Z-axis assembly is configured to implement positioning of the workpiece and the drill in an axial direction of the workpiece; a chuck assembly used for installing the workpiece is disposed on the workpiece rotation C-axis assembly; and the workpiece rotation C-axis assembly is configured to implement positioning of the workpiece and the drill in a circumferential direction of the workpiece.

Preferably, the drill positioning X-axis assembly includes an X-axis carriage, an X-axis guide rail assembly, and an X-axis lead screw assembly; the X-axis guide rail assembly is disposed on the base; the X-axis carriage is slidably connected to the X-axis guide rail assembly; the X-axis carriage is connected to a lead screw nut of the X-axis lead screw assembly; and the X-axis lead screw assembly can drive the X-axis carriage to slide along the X-axis guide rail assembly.

Preferably, the drill swing angle A-axis assembly includes a fixing plate and a turnplate disposed on the fixing plate, and the fixing plate is fastened to the X-axis carriage.

Preferably, the drill feed U-axis assembly includes a U-axis carriage, a U-axis guide rail assembly, and a U-axis lead screw assembly; the U-axis guide rail assembly is disposed on the turnplate; the U-axis carriage is slidably connected to the U-axis guide rail assembly; the U-axis carriage is connected to a lead screw nut of the U-axis lead screw assembly; and the U-axis lead screw assembly can drive the U-axis carriage to slide along the U-axis guide rail assembly.

Preferably, the workpiece movement Z-axis assembly includes a Z-axis carriage, a Z-axis guide rail assembly, and a Z-axis lead screw assembly; the Z-axis guide rail assembly is disposed on the base; the Z-axis carriage is slidably connected to the Z-axis guide rail assembly; the Z-axis carriage is connected to a lead screw nut of the Z-axis lead screw assembly; and the Z-axis lead screw assembly can drive the Z-axis carriage to slide along the Z-axis guide rail assembly.

Preferably, the workpiece rotation C-axis assembly includes a C-axis rotating table and a chuck assembly; a chuck base of the chuck assembly is fastened to the C-axis rotating table; the C-axis rotating table is fastened to the Z-axis carriage, and follows the Z-axis carriage to move; and the chuck assembly drives, through a motor, the workpiece to rotate, to implement positioning of the workpiece and the drill in the circumferential direction of workpiece.

Preferably, the electric spindle assembly is disposed on the U-axis carriage; a clamp assembly is disposed on the electric spindle assembly; the drill is disposed on the clamp assembly; an upper part of the electric spindle assembly is further connected to a following slide arm; one end that is close to the workpiece and that is of the following slide arm is provided with a drill guide device; and the drill guide device is configured to guide the drill.

Preferably, the base is provided with an iron chip guiding device, and there are two iron chip guiding devices.

Preferably, the electric spindle assembly includes an electric spindle and a spindle seat, where the spindle seat is fixedly connected to the U-axis carriage; the electric spindle is fixedly connected to the spindle seat; the following slide arm is slidably connected to the spindle seat; the drill guide device includes a guide sleeve base and a guide sleeve; the guide sleeve seat is disposed at a position that is in the following slide arm and that is corresponding to the drill, a guide sleeve for guiding the drill is sleeved in the guide sleeve seat and an outer end of the guide sleeve extends outside the guide sleeve seat, and a guide hole matching the drill is disposed inside the guide sleeve.

Preferably, the platform further includes a guide sleeve compression device, where the guide sleeve compression device includes a cylinder, a two-position five-way valve, an air reservoir, and a pressure controller; the following slide arm is slidably connected to the spindle seat; the cylinder is fastened to an upper part of the spindle seat, and an axial direction of a piston rod of the cylinder is parallel to an axial direction of the drill; a free end of the piston rod of the cylinder is in threaded connection with a cylinder ball head; the cylinder ball head can be in contact with a front seat disposed on the following slide arm; an air inlet end of the air reservoir is used for connecting to a compressed air source; an air outlet end of the air reservoir is connected to an air inlet of the two-position five-way valve; two air outlets of the two-position five-way valve are respectively connected to a rodless cavity and a rod cavity of the cylinder; two exhaust ports of the two-position five-way valve each are communicated with air; the pressure controller is disposed on a pipeline connecting the air reservoir to the compressed air source; and a one-way valve that makes air from the air source unidirectionally flow into the air reservoir is disposed on a pipeline between the air reservoir and the pressure controller.

Preferably, an air source FRL is disposed on a pipeline connecting the pressure controller to the compressed air source, and a flow-limiting valve is disposed in each of a pipeline connecting the two-position five-way valve to the rodless cavity of the cylinder and a pipeline connecting the two-position five-way valve to the rod-cavity of the cylinder.

Preferably, the following slide arm forms a slip connection with the spindle seat by using a slide arm guide rail; a screw regulation seat is further fastened to the spindle seat; the screw regulation seat is in threaded connection with a limiting regulating stem; an axial direction of the limiting regulating stem is parallel to an axial direction of the drill; a supporting seat is fastened to the following slide arm; the supporting seat is provided with a limiting swing block; and limiting swing block and the supporting seat form a rotational connection parallel to the axial direction of the limiting regulating stem.

Preferably, the platform further includes a high-frequency proximity switch, where the high-frequency proximity switch is installed on a switch base fastened to the spindle seat; the electric spindle includes a spindle housing and a spindle rotating shaft; the spindle housing drives the spindle rotating shaft to rotate; the spindle rotating shaft is provided with a detection notch; a sensing surface of the high-frequency proximity switch penetrates through the spindle housing and can be positive to the detection notch; and a control system of the tire mold drilling working platform controls start/stop of the spindle housing and is in signal connection with the high-frequency proximity switch, to monitor a rotation speed of the spindle rotating shaft.

Preferably, a front end and a rear end of the spindle housing are respectively provided with a front end cover and a rear end cover, the front end cover is internally provided with a front-end-cover inner hole, the rear end cover is internally provided with a rear-end-cover inner hole, the spindle rotating shaft freely penetrates through the front-end-cover inner hole and the rear-end-cover inner hole, and the spindle rotating shaft penetrates through one end of the front end cover for installing the drill; a first annular groove is disposed in a circumferential direction of a side wall of the front-end-cover inner hole, a side wall of the front-end-cover inner hole outside the first annular groove and the spindle rotating shaft form a first external ring gap, and a side wall of the front-end-cover inner hole inside the first annular groove and the spindle rotating shaft form a first inner ring gap; a second annular groove is disposed in a circumferential direction of a side wall of the rear-end-cover inner hole, a side wall of the rear-end-cover inner hole outside the second annular groove and the spindle rotating shaft form a second external ring gap, and a side wall of the rear-end-cover inner hole inside the second annular groove and the spindle rotating shaft form a second inner ring gap; and the spindle housing is provided with an air channel; two ends of the air channel are respectively communicated with the first annular groove and the second annular groove, and the air channel is connected to dry compressed air from outside.

Preferably, a radial depth of the first inner ring gap is smaller than that of the first external ring gap, and a radial depth of the second inner ring gap is smaller than that of the second external ring gap.

Preferably, a spindle cooling liquid channel is disposed inside the spindle rotating shaft along an axial direction, a drill cooling liquid channel communicated with the spindle cooling liquid channel is disposed inside the drill along an axial direction, and the drill is provided with a cooling liquid through-hole communicated with the drill cooling liquid channel; a rear end of the electric spindle is connected to a cooling pressure dynamic monitoring system; the cooling pressure dynamic monitoring system includes a pressure sensor and a quantitative oil pump; an oil inlet of the quantitative oil pump is used to connect to a cooling oil source; an oil outlet of the quantitative oil pump is connected to the electric spindle by using a spindle rotating joint, and the spindle rotating joint is communicated with the spindle cooling liquid channel and the oil outlet of the quantitative oil pump; and the pressure sensor is connected to a pipeline connecting the quantitative oil pump and the electric spindle, and the pressure sensor in signal connection with the control system of the tire mold drilling working platform.

A tire mold drilling numerical control machine tool is further provided, including the above-described tire mold drilling working platform.

Preferably, the tire mold drilling numerical control machine tool further includes a metal plate shield and a frame, where the frame is disposed below a base and supports the tire mold drilling working platform; the metal plate shield covers the tire mold drilling working platform and the frame; and an oil mist collection and purification separator is disposed on an inner top surface of the metal plate shield.

A tire mold vent hole machining method is further provided, where an electric spindle assembly includes an electric spindle and a spindle seat; the spindle seat is fixedly connected to a U-axis carriage; the electric spindle is fixedly connected to the spindle seat; a following slide arm is slidably connected to the spindle seat; a guide sleeve seat is disposed at a position that is in the following slide arm and that is corresponding to a drill; a guide sleeve for guiding the drill is sleeved in the guide sleeve seat, a guide hole matching the drill is disposed inside the guide sleeve, and the tire mold drilling numerical control machine tool is used for machining vent holes of a tire mold; and the method includes the following steps:
step 1. machining a positioning groove for each corresponding vent hole on an outer surface of the tire mold, where a bottom surface of the positioning groove is perpendicular to an axis of a to-be-machined vent hole; and
step 2. making an outer end surface of the guide sleeve attached to the bottom surface of the positioning groove, and allowing the drill to drill a hole from an outer surface of the tire mold to an interior of the tire mold to obtain a vent hole.

The present invention achieves the following technical effects compared with the prior art:
The tire mold drilling working platform and the tire mold drilling numerical control machine tool provided in the present invention are provided with a workpiece movement Z-axis assembly and a workpiece rotation C-axis assembly that can implement positioning of the workpiece and the drill in the axial direction of the workpiece and the circumferential direction of the workpiece; and are further provided with a drill positioning X-axis assembly that implements positioning of the workpiece and the drill in the diameter direction of the workpiece, a drill swing angle A-axis assembly that can implement control of a drill swing angle, and a drill feed U-axis assembly that can implement feed of the drill and control of a drilling depth. The tire mold drilling working platform and the tire mold drilling numerical control machine tool have advantages of simple structure, small occupation space, wide machining range, high machining efficiency, high drill hole concentricity, and high surface smoothness of inner holes, and have important reference significance and reference value for the field of machining technologies.

Further, the tire mold drilling working platform and the tire mold drilling numerical control machine tool provided in the present invention five-axis use a five-axis linkage, improve the machining efficiency and precision, and have important research significance for the field of machining and production of a tire mold and other products.

Further, according to the tire mold drilling working platform and the tire mold drilling numerical control machine tool provided in the present invention, when the drill drills into a surface of the workpiece, a drill guiding device is used to guide the drill. This can effectively reduce the vibration of the drill, so as to effectively protect the drill, avoid drill breaking, ensure the drill positioning accuracy, improve the drill-hole drilling stability, and ensure the drill hole smoothness. A guide sleeve compression device in the present invention is used. Before the drill performs drilling, a two-position five-way valve is first opened, so that an air reservoir is communicated with a rodless cavity of a cylinder through the two-position five-way valve, and a rod cavity of the cylinder is communicated with air through the two-position five-way valve; a guide sleeve and the drill are positioned at a to-be-drilled position, so that a cylinder ball head fastened to a piston rod of the cylinder is tightly compressed on a front seat; when the drill drills into the workpiece, a following slide arm moves backward relative to an electric spindle, so as to push the piston rod to move backward relative to the cylinder, so that air in the rodless cavity of the cylinder flows back to the air reservoir through the two-position five-way valve for energy absorption; when the drill exits the workpiece, compressed air in the air reservoir flows into the rodless cavity of the cylinder through the two-position five-way valve to reversely push a piston of the cylinder to move forward relative to the cylinder, while pressure in the rodless cavity of the cylinder always keeps consistent with pressure of air in the air reservoir; a pressure controller is configured to control the pressure inside the air reservoir to be in a stable state, so as to make the piston rod steadily compressed on the front seat tightly at constant pressure; the following slide arm is pushed and make the guide sleeve compression device steadily compressed on the guide sleeve tightly; pressure applied by the cylinder to the front seat of the following slide arm is stable, the guide sleeve does not vibrate, and the guide sleeve steadily compresses the tire mold tightly, so that the drill can obtain extremely stable and smooth thrust output during a drilling process, and ensure that the guide sleeve always effectively guides the drill and effectively protects the drill.

Further, according to the tire mold drilling working platform and the tire mold drilling numerical control machine tool provided in the present invention, comparison and data sensation are performed on rotation speed fluctuation of a spindle rotating shaft measured by a high-frequency proximity switch and a load mathematical model that has been established inside a control system, it can be accurately determined, through a difference between rotation speed changes and a drill position, whether the drill is worn or damaged, so as to effectively determine a drill status and perform monitoring and early warning.

Further, according to the tire mold drilling working platform and the tire mold drilling numerical control machine tool provided in the present invention, an air seal ring is formed at front and rear ends of the electric spindle on the tire mold drilling working platform, and the air seal ring is used to prevent external liquid oil mist or iron chips from entering the electric spindle, so as to ensure safety of internal coils.

Further, according to the tire mold drilling working platform and the tire mold drilling numerical control machine tool provided in the present invention, a cooling pressure dynamic monitoring system is disposed to collect pressure in a spindle cooling liquid channel in real time through a pressure sensor, and compares the pressure with a pressure threshold preset in the control system. This can effectively detect drill breaking.

According to the tire mold vent hole machining method provided in the present invention, the tire mold is drilled inward from an outer surface of an annular tire mold blank, and a positioning groove is obtained through cutting in advance on an end surface and an outer circle. A surface of the positioning groove is perpendicular to an axis of a drilled hole, which is convenient for guiding drilling of a single-edged gun drill. Patterns can be etched in a segmented tire mold after all vent holes of the segmented tire mold are drilled, and finally the tire mold is cut into blocks. This improves the machining efficiency and precision of the tire mold and effectively resolves a problem of continuous automatic high-precision and high-efficiency machining during tire mold drilling.

### BRIEF DESCRIPTION OF THE DRAWINGS

To describe the technical solutions in the embodiments of the present invention or in the prior art more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic diagram of a three-dimensional structure of a tire mold drilling working platform according to the present invention;
FIG. 2 is a schematic diagram of another three-dimensional structure of a tire mold drilling working platform according to the present invention;
FIG. 3 is a front view of a tire mold drilling working platform according to the present invention;
FIG. 4 is a top view of a tire mold drilling working platform according to the present invention;
FIG. 5 is a front view of an electric spindle assembly and a guide sleeve compression device of a tire mold drilling working platform according to the present invention;
FIG. 6 is a right side view of the electric spindle assembly and the guide sleeve compression device in FIG. 5;
FIG. 7 is a front section view of the electric spindle assembly and the guide sleeve compression device in FIG. 5;
FIG. 8 is a partial enlarged schematic diagram of a position I of the electric spindle assembly and the guide sleeve compression device in FIG. 6;
FIG. 9 is a partial enlarged schematic diagram of a position II of the electric spindle assembly and the guide sleeve compression device in FIG. 7;
FIG. 10 is a top view of the electric spindle assembly and the guide sleeve compression device in FIG. 5;
FIG. 11 is a schematic three-dimensional diagram of an electric spindle assembly and a guide sleeve compression device of a tire mold drilling working platform according to the present invention;
FIG. 12 is a simplified schematic structural diagram of a guide sleeve compression device of a tire mold drilling working platform according to the present invention;
FIG. 13 is a schematic diagram of air seal structure of an electric spindle of a tire mold drilling working platform according to the present invention;
FIG. 14 is a partial enlarged schematic diagram of a position A of the air seal structure of the electric spindle in FIG. 13;
FIG. 15 is a partial enlarged schematic diagram of a position B of the air seal structure of the electric spindle in FIG. 14;
FIG. 16 is a schematic diagram of a working status of a normal drill in a cooling pressure dynamic monitoring system of a tire mold drilling working platform according to the present invention;
FIG. 17 is a schematic diagram of a working status of a broken drill in a cooling pressure dynamic monitoring system of a tire mold drilling working platform according to the present invention;
FIG. 18 is a schematic diagram of a working process view of a cooling pressure dynamic monitoring system of a tire mold drilling working platform according to the present invention;
FIG. 19 is a front view of a tire mold drilling numerical control machine tool not according to the present invention;

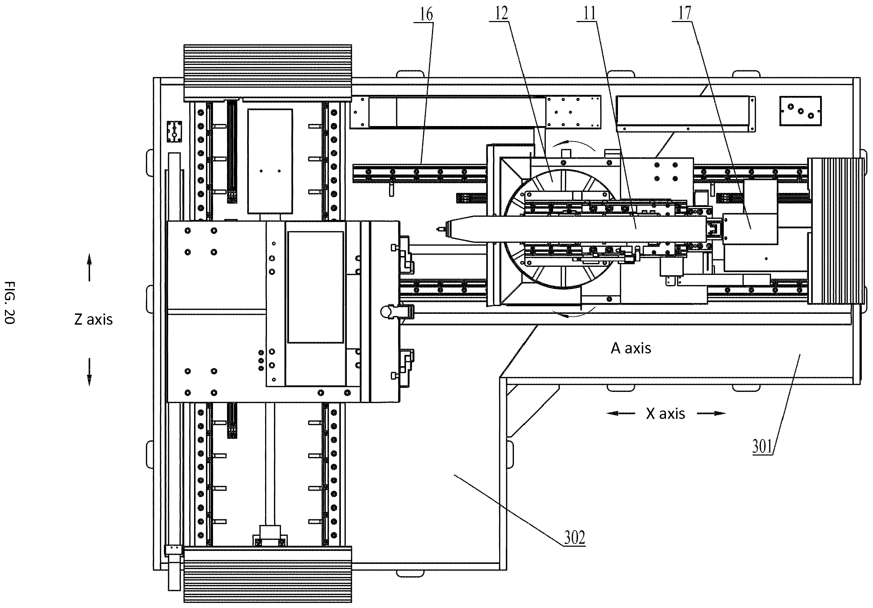

FIG. 20 is a top view of a tire mold drilling numerical control machine tool not according to the present invention;
FIG. 21 is a right side view of a tire mold drilling numerical control machine tool not according to the present invention;

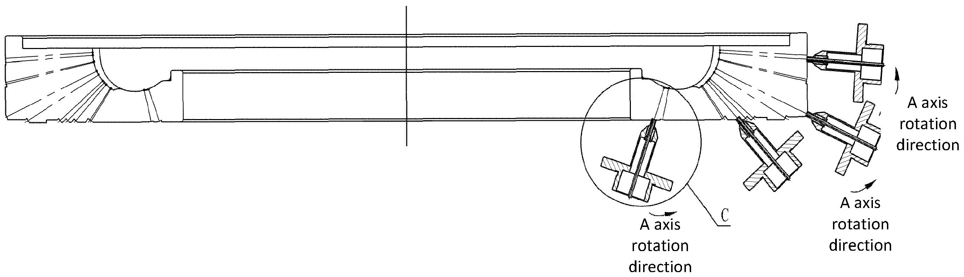

FIG. 22 is a schematic working diagram of drilling a tire mold by a tire mold drilling numerical control machine tool according to the present invention; and

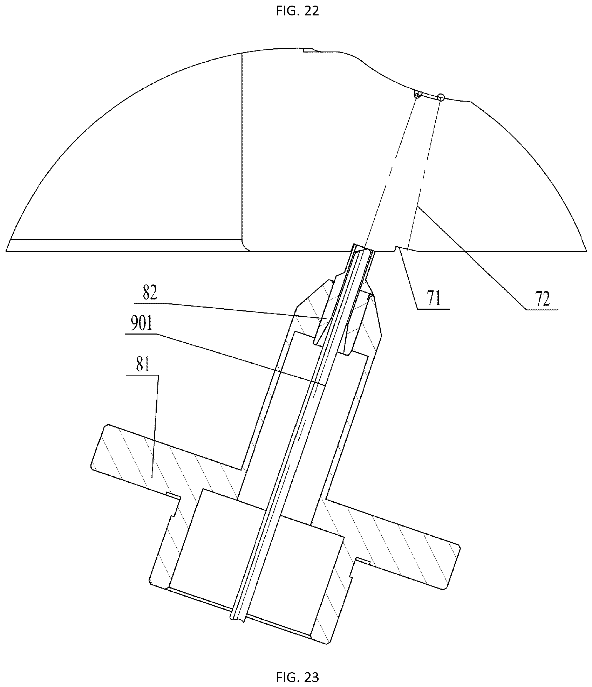

FIG. 23 is partial enlarged schematic diagram of a position C of the tire mold in FIG. 22.

Reference signs: 1: Z-axis lead screw assembly; 2: Z-axis guide rail assembly; 3: base; 301: first base plate; 302: second base plate; 4: Z-axis carriage; 5: C-axis rotating table; 6: chuck assembly; 7: workpiece; 71: positioning groove; 72: exhaust hole axis; 8: drill guide device; 9: drill-clamp assembly; 901: drill; 10: electric spindle assembly; 102: electric spindle; 1021: spindle housing; 10211: front end cover: 10212: first annular groove; 10213: first external ring gap; 10214: first inner ring gap; 10215: air channel; 1022: spindle rotating shaft; 1023: detection notch; 1024: high-frequency proximity switch; 1025: switch base; 103: spindle seat; 1031: screw regulation seat; 1032: limiting regulating stem; 1033: cylinder tailstock; 104: pressure sensor; 81: guide sleeve base; 82: guide sleeve; 821: guide sleeve compression device; 8211: cylinder; 8212: two-position five-way valve; 8213: air reservoir; 8214: pressure controller; 8215: cylinder ball head; 8216: front seat; 8217: one-way valve; 8218: air source FRL; 11: following slide arm, 111: slide arm guide rail, 112: supporting seat, 113: limiting swing block, 12: knife rest angular A-axis assembly, 121: fixing plate, 122: turnplate; 13: U-axis carriage; 14: U-axis guide rail assembly; 15: X-axis carriage; 16: X-axis guide rail assembly; 17: X-axis lead screw assembly; 18: iron chip guiding device; 19: U-axis lead screw assembly.

### DETAILED DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

To resolve the foregoing technical problem, the present invention provides a tire mold drilling working platform, a tire mold drilling numerical control machine tool, and a tire mold vent hole machining method. The tire mold drilling working platform and the tire mold drilling numerical control machine tool tire mold drilling platform have small occupancy space and a wide machining range, can simultaneously implement positioning of a workpiece and a drill in a diameter direction of the workpiece, an axial direction of the workpiece, and a circumferential direction of the workpiece, and can control a swing angle of the drill, drill feed, a drill speed, and a drilling depth, so as to achieve high machining efficiency, a simple drilling process, and high drilling precision. The tire mold vent hole machining method can improve machining efficiency of a tire mold, and effectively resolve a problem of continuous automatic machining of dill holes of the tire mold.

To make the foregoing objective, features, and advantages of the present invention clearer and more comprehensible, the present invention is further described in detail below with reference to the accompanying drawings and specific embodiments.

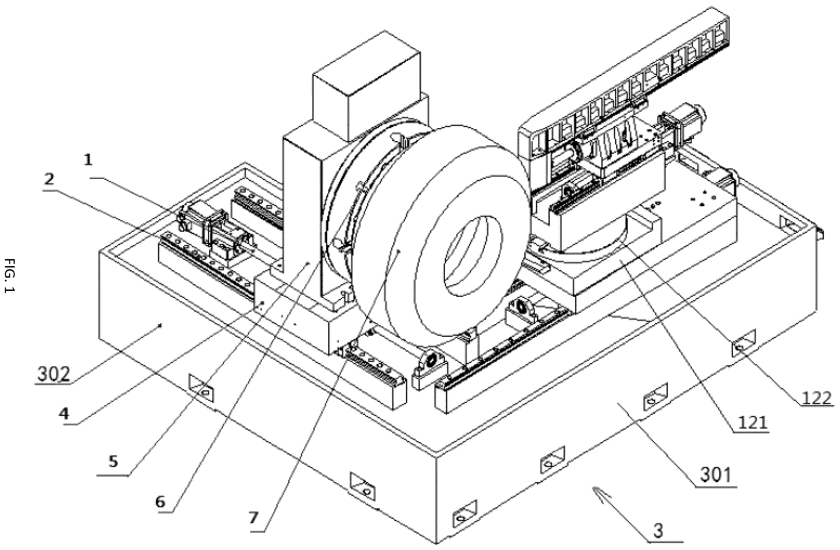

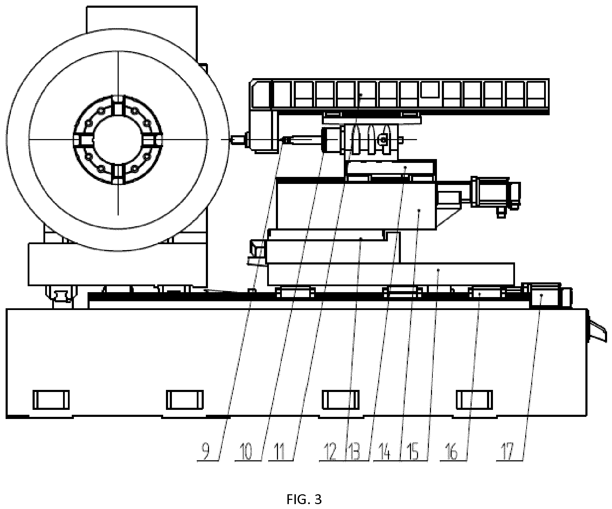

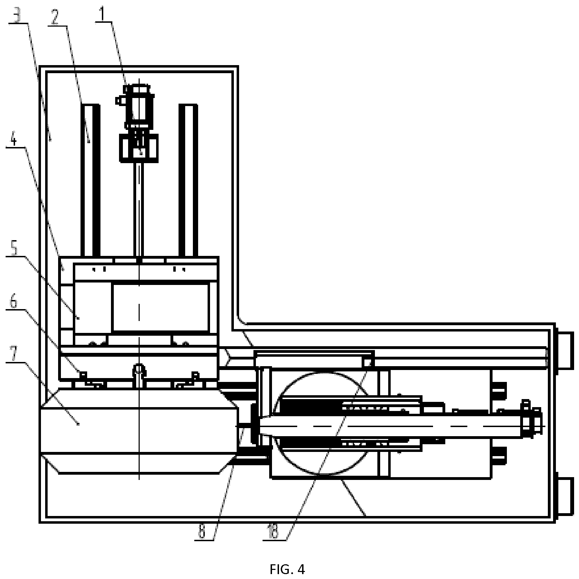

The present invention provides a tire mold drilling working platform. As shown in FIG. 1 to FIG. 4, the tire mold drilling working platform includes a base 3 and a drill positioning X-axis assembly disposed on the base 3, where a drill swing angle A-axis assembly is disposed on the drill positioning X-axis assembly; a drill feed U-axis assembly is disposed on the drill swing angle A-axis assembly; an electric spindle assembly 10 is disposed on the drill feed U-axis assembly; a drill 901 is disposed on the electric spindle assembly 10; the drill positioning X-axis assembly is configured to implement positioning of the drill 901 and a workpiece 7 in a diameter direction of the workpiece 7; the drill swing angle A-axis assembly is configured to control a swing angle of the drill 901; the drill feed U-axis assembly is configured to implement feed of the drill 901 and control a drilling depth; a workpiece movement Z-axis assembly is further disposed on the base 3; a workpiece rotation C-axis assembly is disposed on the workpiece movement Z-axis assembly; the workpiece movement Z-axis assembly is configured to implement positioning of the workpiece 7 and the drill 901 in an axial direction of the workpiece 7; a chuck assembly 6 used for installing the workpiece 7 is disposed on the workpiece rotation C-axis assembly; and the workpiece rotation C-axis assembly is configured to implement positioning of the workpiece 7 and the drill 901 in a circumferential direction of the workpiece 7. The workpiece 7 that needs to be machined in the present invention is a tire mold, linkage of the drill positioning X-axis assembly, the drill swing angle A-axis assembly, the drill feed U-axis assembly, the electric spindle assembly 10, the workpiece movement Z-axis assembly, and the workpiece rotation C-axis assembly can implement drilling of the tire mold, that is, machining of vent holes of the tire mold.

In a specific embodiment of the present invention, on the tire mold drilling working platform, the base 3 includes a first base plate 301 and a second base plate 302 in L-shaped arrangement, where both the first base plate 301 and the second base plate 302 are horizontally disposed, and one end of the first base plate 301 is vertically connected to one end of the second base plate 302. The first base plate 301 is provided with a drill positioning X-axis assembly, where the drill positioning X-axis assembly includes an X-axis carriage 15, an X-axis guide rail assembly 16, and an X-axis lead screw assembly 17; the X-axis guide rail assembly 16 is disposed on the first base plate 301 of the base 3, the X-axis guide rail assembly 16 includes two symmetrical slide grooves, the slide grooves are disposed along a length direction of the first base plate 301, an idler wheel corresponding to the groove is disposed at the bottom of the X-axis carriage 15, and the idler wheel can roll along the slide grooves; the X-axis lead screw assembly 17 includes an X-axis motor, an X-axis lead screw, and an X-axis lead screw nut; the X-axis motor is fastened to the first base plate 301 of the base 3, and the X-axis motor is a servo motor; an output shaft of the X-axis motor is connected to one end of the X-axis lead screw; the X-axis lead screw is in threaded connection with the X-axis lead screw nut; the X-axis carriage 15 is slidably connected to the slide groove of the X-axis guide rail assembly 16 through the idler wheel; the X-axis carriage 15 is connected to the X-axis lead screw nut of the X-axis lead screw assembly 17; the X-axis lead screw assembly 17 can drive the X-axis carriage 15 to slide back and forth on the X-axis guide rail assembly 16; and the drill positioning X-axis assembly can implement positioning of the drill 901 and the workpiece 7 in a diameter direction of the workpiece 7 by controlling the X-axis lead screw assembly 17 through a control system.

In another specific embodiment of the present invention, a drill swing angle A-axis assembly 12 is disposed on the drill positioning X-axis assembly, where the drill swing angle A-axis assembly 12 includes a fixing plate 121 and a turnplate 122 disposed on the fixing plate 121; the turnplate 122 is a numerical control rotating table; the fixing plate 122 is fastened to the X-axis carriage 15. The turnplate 122 can rotate relative to an axis of the turnplate 122 on the fixing plate 121, that is, the turnplate 122 can rotate freely around a vertical direction at any angle, so that the drill swing angle A-axis assembly 12 controls a drilling angle of the drill 901 on the workpiece 7 and determines a tool nose position when being linked with another axis.

In another specific embodiment of the present invention, the drill feed U-axis assembly includes a U-axis carriage 13, a U-axis guide rail assembly 14, and a U-axis lead screw assembly 19, the U-axis guide rail assembly 14 is disposed on the turnplate 122, the U-axis carriage 13 is slidably connected to the U-axis guide rail assembly 14, the U-axis carriage 13 is connected to a lead screw nut of the U-axis lead screw assembly 19, and the U-axis lead screw assembly 19 can drive the U-axis carriage 13 to slide along the U-axis guide rail assembly 14. The U-axis lead screw assembly 19 includes a U-axis motor, a U-axis lead screw, and a U-axis lead screw nut, where the U-axis motor is a servo motor, an output shaft of the U-axis motor is connected to one end of the U-axis lead screw, the U-axis lead screw is in threaded connection with the U-axis lead screw nut, and the U-axis lead screw assembly 19 drives the U-axis carriage 13 to slide back and forth along the U-axis guide rail assembly 14. The U-axis carriage 13 can move independently or move in a linked manner, and a main function of the U-axis lead screw assembly 19 is to implement feed of the drill 901 and control of a depth of a drill hole during drilling and precisely determine, when being linked with another axis, a position that needs to be drilled by the drill 901.

In another specific embodiment of the present invention, the workpiece movement Z-axis assembly includes a Z-axis carriage 4, a Z-axis guide rail assembly 2, and a Z-axis lead screw assembly 1; the Z-axis guide rail assembly 2 is disposed on the second base plate 302 of the base 3; a length direction of the Z-axis guide rail assembly 2 is perpendicular to a length direction of the X-axis guide rail assembly 16; the Z-axis carriage 4 is slidably connected to the Z-axis guide rail assembly 2; the Z-axis carriage 4 is connected to a lead screw nut of the Z-axis lead screw assembly 1; and the Z-axis lead screw assembly 1 can drive the Z-axis carriage 4 to slide along the Z-axis guide rail assembly 2. The Z-axis lead screw assembly 1 includes a Z-axis motor, a Z-axis lead screw, and a Z-axis lead screw nut; the Z-axis motor is fastened to the second base plate 301 of the base 3, and the Z-axis motor is a servo motor; an output shaft of the Z-axis motor is connected to one end of the Z-axis lead screw; the Z-axis lead screw is in threaded connection with the Z-axis lead screw nut; the Z-axis carriage 4 is slidably connected to a slide groove of the Z-axis guide rail assembly through a idler wheel; the slide groove of the Z-axis guide rail assembly 2 is perpendicular to the slide groove of the X-axis guide rail assembly 16; the Z-axis carriage 4 is connected to the Z-axis lead screw nut of the Z-axis lead screw assembly 1; the Z-axis lead screw assembly 1 can drive the Z-axis carriage 4 to slide back and forth on the Z-axis guide rail assembly 2; and the drill positioning Z-axis assembly can implement positioning of the drill 901 and the workpiece 7 in a diameter direction of the workpiece 7 by controlling the Z-axis lead screw assembly 1 through the control system. The workpiece movement Z-axis assembly can move independently or move in a linked manner in cooperation with another axis, and the workpiece movement Z-axis assembly is configured to implement positioning of the workpiece 7 and the drill 901 in an axial direction of the workpiece 7, and can precisely determine a drilling position of the workpiece 7 when multiple axes are linked.

In another specific embodiment of the present invention, the workpiece rotation C-axis assembly includes a C-axis rotating table 5 and a chuck assembly 6, a chuck base of the chuck assembly 6 is fastened to the C-axis rotating table 5; the C-axis rotating table 5 is fastened to the Z-axis carriage 4, and follows the Z-axis carriage 4 to move; and the chuck assembly 6 drives, through a motor, the workpiece to rotate, to implement positioning of the workpiece 7 and the drill 901 in the circumferential direction of workpiece 7. The chuck assembly 6 is disposed at a front end of the C-axis rotating table 5, which can implement clamping of an annular tire mold. Under drive of a servo motor, the chuck assembly can implement indexing rotation of any angle, and can implement precise indexing and tool nose positioning of a hole position on a ring surface of the tire mold when being linked with another axis. Due to setting of the workpiece movement Z-axis assembly and the workpiece rotation C-axis assembly, positioning of the workpiece 7 and the drill 901 in the axial direction and circumferential direction of the workpiece can be implemented during a drilling process of the tire mold, so as to achieve higher machining precision.

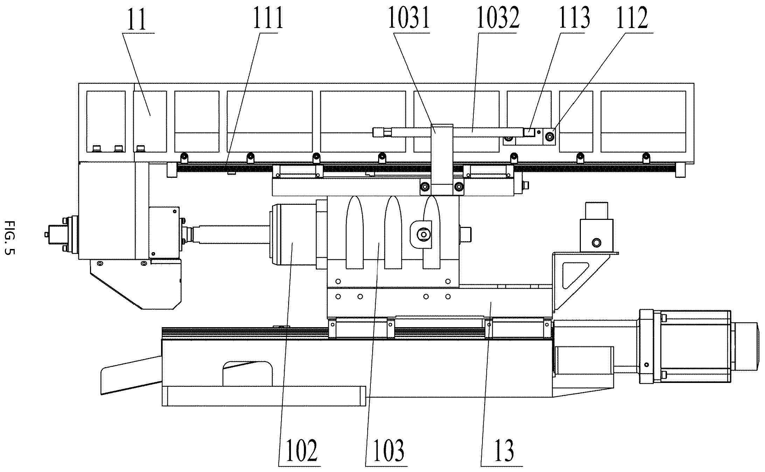

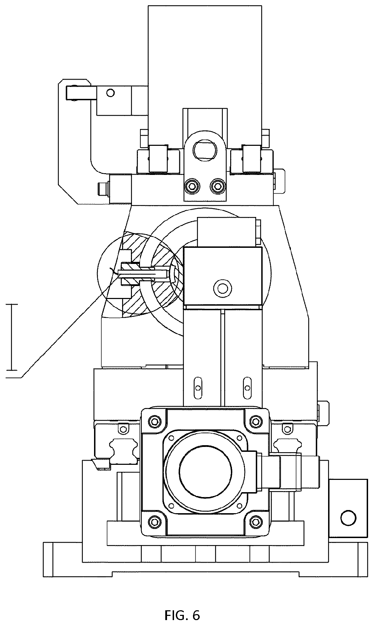

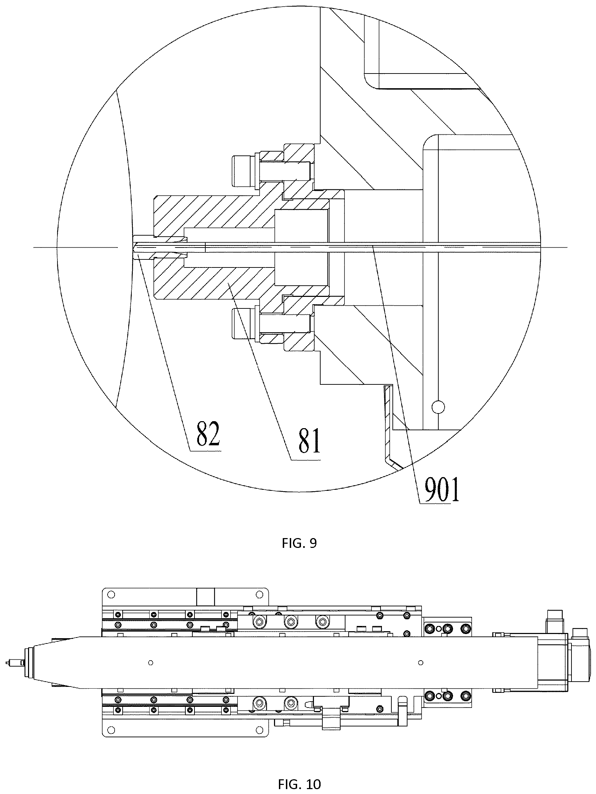

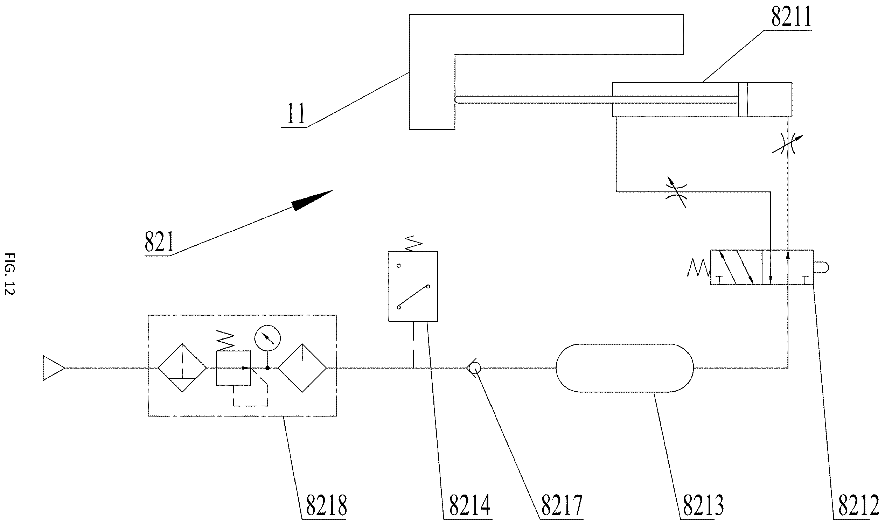

In another specific embodiment of the present invention, as shown in FIG. 5 to FIG. 12, the electric spindle assembly 10 is disposed on the U-axis carriage 13, a clamp assembly is disposed on the electric spindle assembly 10, the drill 901 is disposed on the clamp assembly, an upper part of the electric spindle assembly 10 is further connected to a following slide arm 11, one end that is close to the workpiece 7 and that is of the following slide arm 11 is provided with a drill guide device 8, and the drill guide device 8 is configured to guide the drill 901.

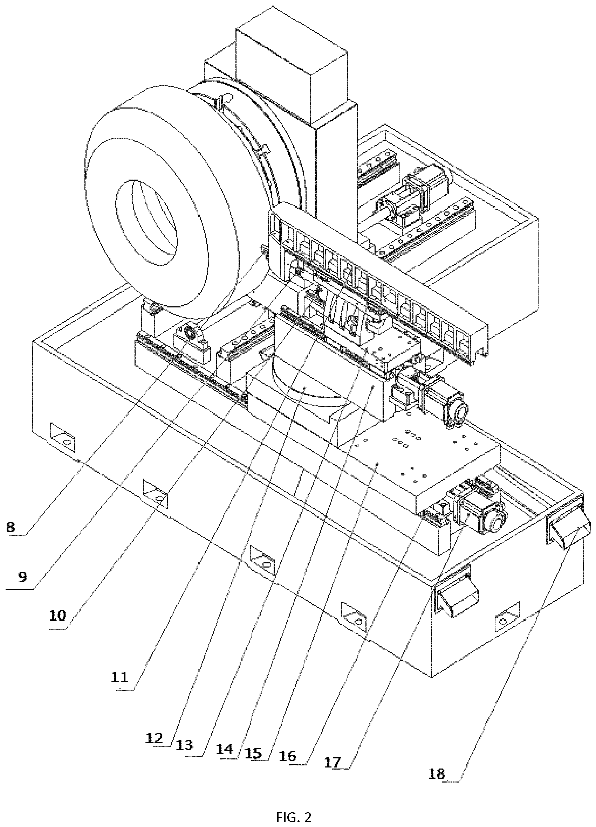

In order to facilitate cleaning of processed iron chips, an iron chip guiding device 18 is disposed on the base 3. As shown in FIG. 2, there are two iron chip guiding devices 18, and the iron chip guiding devices 18 are disposed on a side wall of the base 3. A lower end of an opening of the iron chip guiding device 18 is on a same plane as an inner bottom surface of the base 3. This can better clean iron chips. Drilled iron chips are recycled to a chip removal system through the iron chip guiding device 18, and collected by the chip removal system to the chip collection truck for processing.

It can be learned from the foregoing that the tire mold drilling numerical control machine tool in the present invention can simultaneously implement positioning of the workpiece 7 and the drill 901 in an axial direction of the workpiece 7, a circumferential direction of the workpiece, and in a diameter direction of the workpiece, and can also implement control of a swing angle of the drill 901, feed of the drill 901, and a drilling depth. The tire mold drilling numerical control machine tool has a simple structure, small occupancy space, and a wide machining range, and also has advantages of high machining efficiency and high drilling precision, and can resolve a problem that machining precision is low because an existing tire mold drilling numerical control machine tool cannot rotate and move.

In another specific embodiment of the present invention, the electric spindle assembly 10 includes an electric spindle 102 and a spindle seat 103, where the spindle seat 103 is fixedly connected to the U-axis carriage 13, the electric spindle 102 is fixedly connected to the spindle seat 103, and the following slide arm 11 is slidably connected to the spindle seat 103; the drill guide device 8 includes a guide sleeve base 81 and a guide sleeve 82; the guide sleeve seat 81 is disposed at a position that is in the following slide arm 11 and that is corresponding to the drill 901, a guide sleeve 82 for guiding the drill 901 is sleeved in the guide sleeve seat 81 and an outer end of the guide sleeve 82 extends outside the guide sleeve seat 81; and a guide hole matching the drill 901 is disposed inside the guide sleeve 82. A center height of the electric spindle 102 is equal to that of the C-axis rotating table 5, which ensures that a center of a drill hole coincides with a center of the workpiece 7. The electric spindle 102 is a high-speed electric spindle whose center discharges liquid, and an ER-type spring collet is used to clamp the drill 901 at a front end of the electric spindle 102. Discharging liquid from the center can satisfy an inner cooling requirement of the drill 901. The following slide arm 11 is disposed above the electric spindle 102, the guide sleeve seat 81 is disposed at a front end of the following slide arm 11, and the guide sleeve 82 is disposed at a front end of the guide sleeve seat 81. Guiding of drills 901 of various hole diameters can be implemented by changing guide sleeves 82 of different specifications.

In another specific embodiment of the present invention, the tire mold drilling working platform further includes a guide sleeve compression device 821, where the guide sleeve compression device 821 includes a cylinder 8211, a two-position five-way valve 8212, an air reservoir 8213, and a pressure controller 8214; the following slide arm 11 is slidably connected to the spindle seat 103; the cylinder 8211 is fastened to an upper part of the spindle seat 103 through a cylinder tailstock 1033, and an axial direction of a piston rod of the cylinder 8211 is parallel to an axial direction of the drill 901; a free end of the piston rod of the cylinder 8211 is in threaded connection with a cylinder ball head 8215, and the cylinder ball head 8215 can be in contact with a front seat 8216 disposed on the following slide arm 11. That the cylinder ball head 8215 is in contact with the front seat 8216 can reduce a requirement on the machining accuracy of an outer surface of the front seat 8216, and the cylinder ball head 8215 and the front seat 8216 are separated from each other, which is convenient for operation during replacement of the drill 901. An air inlet end of the air reservoir 8213 is used for connecting to a compressed air source, an air outlet end of the air reservoir 8213 is connected to an air inlet of the two-position five-way valve 8212, two air outlets of the two-position five-way valve 8212 are respectively connected to a rodless cavity and a rod cavity of the cylinder 8211, two exhaust ports of the two-position five-way valve 8212 each are communicated with air, and the pressure controller 8214 is disposed on a pipeline connecting the air reservoir 8213 to the compressed air source, and a one-way valve 8217 that makes air from the air source unidirectionally flow into the air reservoir 8213 is disposed on a pipeline between the air reservoir 8213 and the pressure controller 8214.

Because the drill 901 used by the tire mold drilling working platform in this embodiment is a single-edged gun drill. When the drill 901 drills into a surface of the workpiece 7, it is necessary to guide the drill 901 to effectively reduce the vibration of the drill 901, so as to effectively protect the drill 901, avoid drill breaking, ensure the positioning accuracy of the drill 901, improve the drilling stability of the drill 901, and ensure the drill hole smoothness. The guide sleeve compression device 821 in this embodiment is used. Before the drill 901 performs drilling, the two-position five-way valve 8212 is first opened, so that the air reservoir 8213 is communicated with the rodless cavity of the cylinder 8211 through the two-position five-way valve 8212, and the rod cavity of the cylinder 8211 is communicated with air through the two-position five-way valve 8212; the guide sleeve 82 and the drill 901 are positioned at a to-be-drilled position, so that the cylinder ball head 8215 fastened to the piston rod of the cylinder 8211 is tightly compressed on the front seat 8216; when the drill 901 drills into the workpiece 7, the following slide arm 11 moves backward relative to the electric spindle 102, so as to push the piston rod to move backward relative to the cylinder 8211, so that air in the rodless cavity of the cylinder 8211 flows back to the air reservoir 8213 through the two-position five-way valve 8212 for energy absorption; when the drill 901 exits the workpiece, compressed air in the air reservoir 8213 flows into the rodless cavity of the cylinder 8211 through the two-position five-way valve 8212 to reversely push a piston of the cylinder 8212 to move forward relative to the cylinder 8211, while pressure in the rodless cavity of the cylinder 8211 always keeps consistent with pressure of air in the air reservoir 8213; the pressure controller 8214 is configured to control the pressure inside the air reservoir 8213 to be in a stable state, so as to make the piston rod steadily compressed on the front seat 8216 tightly at constant pressure; the following slide arm 11 is pushed and make the guide sleeve compression device 821 steadily compressed on the guide sleeve 82 tightly; and the guide sleeve 801 steadily compresses the tire mold tightly, so that it is ensured that the guide sleeve 82 always effectively protects the drill 901. The air reservoir 8213 in this embodiment is an air reservoir with a diameter of 300 mm and a length of 500 mm, and the cylinder 8211 is a cylinder with a diameter of 20 mm and a length of 150 mm. Because the air reservoir 8213 has oversized energy storage space, air pressure in the air reservoir 8213 remains a stable state. The pressure applied by the cylinder 8211 to the front seat 8216 of the following slide arm 11 is stable, and the guide sleeve 82 does not vibrate, so that the drill 901 can obtain extremely stable and smooth thrust output during the drilling process. The two-position five-way valve 8212 may be a mechanical valve or an electromagnetic valve. Under control of the two-position five-way valve 8212, stretching/contraction of the following slide arm 11 can also be controlled arbitrarily. When there is air leakage at a position on the guide sleeve compression device 821, and when the pressure controller 8214 detects that pressure inside the air reservoir 8213 is lower than specified pressure, the pressure controller 8214 can make the compressed air source communicated with the air reservoir 8213 in a timely manner, to remain stable pressure inside the air reservoir 8213, and make the communication cut off by using the one-way valve 8217, so as to avoid backflow. When an external air source is abnormal, the pressure controller 8214 first sends an alerting signal to a machine tool control system. Air pressure inside the air reservoir 8213 is sufficient to ensure that the machine tool makes a cutter return to a safe position and shuts down after a single drill beat is complete and provides corresponding error code.

Stable pressure is applied by the guide sleeve compression device 821 in this embodiment to the guide sleeve 82, so as to make the guide sleeve 82 steadily compress the tire mold, and ensure working stability of the drill 901.

In another specific embodiment of the present invention, an air source FRL 8218 is disposed on a pipeline connecting the pressure controller 8214 to the compressed air source, and a flow-limiting valve is disposed in each of a pipeline connecting the two-position five-way valve 8212 to the rodless cavity of the cylinder 8211 and a pipeline connecting the two-position five-way valve to the rod-cavity of the cylinder 8211. The air source FRL 8218 can implement air source supply of an air source, filter out input water mist and oil mist in the compressed air, and purify the air source, and the flow-limiting valve can adjust flow of air that is introduce to the cylinder 8211 or that is discharged from the cylinder 8211, so as to ensure a stable movement speed of the piston of the cylinder 8211.

In another specific embodiment of the present invention, the following slide arm 11 forms a slip connection with the spindle seat 103 by using a slide arm guide rail 111; a screw regulation seat 1031 is further fastened to the spindle seat 103; the screw regulation seat 1031 is in threaded connection with a limiting regulating stem 1032; an axial direction of the limiting regulating stem 1032 is parallel to an axial direction of the drill 901; a supporting seat 112 is fastened to the following slide arm 11; the supporting seat 112 is provided with a limiting swing block 113; and the limiting swing block 113 and the supporting seat 112 form a rotational connection parallel to the axial direction of the limiting regulating stem 1032.

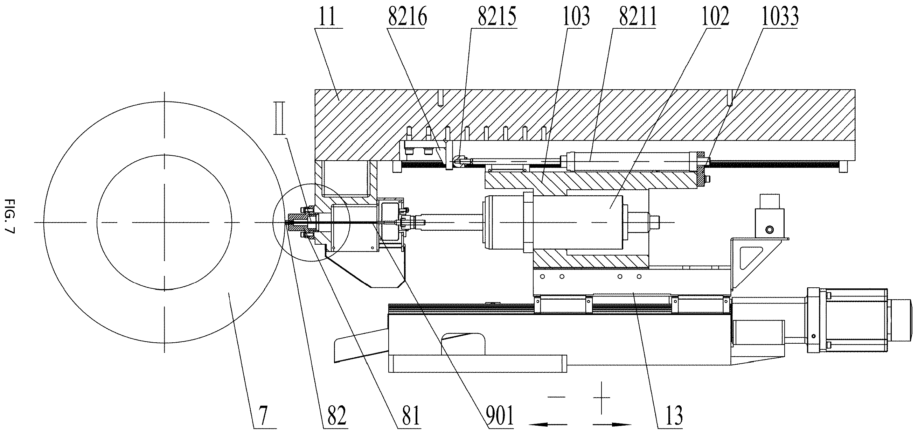

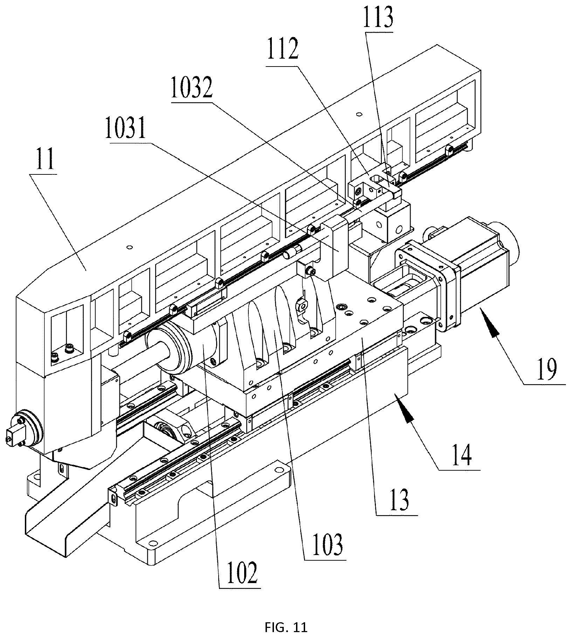

The limiting swing block 113 is disposed on the supporting seat 112 by using a cylindrical pin; an axial direction of the cylindrical pin is parallel to an axial direction of the limiting regulating stem 1032; and the limiting swing block 113 can swing around the cylindrical pin at a 90-degree angle. As show in FIG. 11, to swing to a horizontal direction, an end surface of the limiting regulating stem 1032 is in contact with the limiting swing block 113 freely. By regulating a position of the limiting regulating stem 1032 relative to the screw regulation seat 1031, a use requirement of drills of different lengths is satisfied, and a displacement distance of the following slide arm 11 relative to the spindle seat 103 can be limited, that is, a displacement distance of the drill 901 relative to the guide sleeve 82 can be limited when the drill 901 exits. The piston rod of the cylinder 8211 is steadily compressed on the front seat 8216 of the following slide arm 11, and the limiting swing block 113 can limit displacement of the following slide arm 11 relative to the spindle seat 103. Therefore, in a positioning process in which the drill 901 and the guide sleeve 82 perform machining of a next drill hole, the drill 901 moves together with the guide sleeve 82. It should be noted that, at an initial working position of a gun drill 901, a drill tip of the drill 901 needs to be flush with an outer end surface of the guide sleeve 82, but the drill tip of the drill 901 is not allowed to expose outside an end surface of the guide sleeve, so as to avoid damage of the drill 901. The cylinder ball head 8215 is in contact with the front seat 8216 freely. When air supplied by the air source enters the rodless cavity of the cylinder 8211 through the two-position five-way valve 8212, the piston rod of the cylinder and the cylinder ball head 8215 extend forward, and the cylinder ball head 8215 is in contact with the front seat 8216 freely to drive the following slide arm 11 to slide on the slide arm guide rail 111. When the limiting regulating stem 1032 is in free contact with the limiting swing block 113 that swings to a horizontal position, the following slide arm 11 stops extending forward due to a limitation of the limiting swing block 113, and in this case, the limiting regulating stem 1032 is regulated to ensure that the drill tip of the drill 901 is flush with the end surface of the guide sleeve 82. The spindle seat 103 is fastened to the U-axis carriage 13 by using a bolt. As shown in FIG. 7, when the U-axis carriage 13 moves toward a "-" direction to cut the workpiece 7 for drilling a hole, the U-axis carriage 13 drives the drill 901 to move toward the "-" direction, and surfaces of the guide sleeve 82 and the workpiece 7 are in contact with each other and do not move, so that the front seat 8216 disposed on the following slide arm 11 pushes the cylinder ball head 8215 to drive the piston rod of the cylinder 8211 to move toward a "+" direction, so as to compress air in the cylinder 8211 to flow back to the air reservoir 8213 for energy absorption. When the U-axis carriage 13 moves toward the "+" direction and the drill 901 exits, the U-axis carriage 13 drives the drill 901 to move toward the "+" direction; and compressed air in the air reservoir 8213 reversely pushes the piston of the cylinder 8211 to drive forward the front seat 8216 and the cylinder ball head 8215 together, so as to make the following slide arm 11 pushed out, for next drilling.

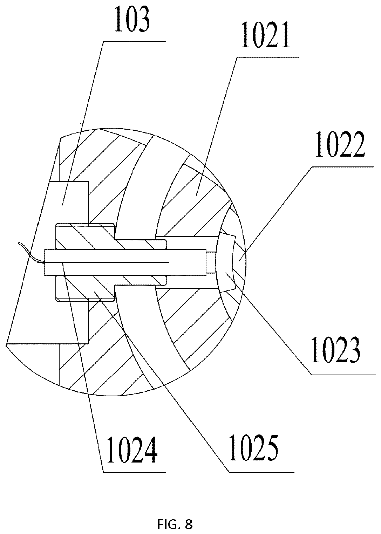

As shown in FIG. 8, because the tire mold drilling working platform uses a high-speed electric spindle to directly drive the drill for drilling a hole, and an entire solid carbide drill tool has a high price, damage of the drill 901 caused due to non-timely reground or an abnormal situation of the drill 901 causes an increase in machining costs and an adverse consequence such as product scrap. To dynamically monitor a rotation speed and a loading condition of the electric spindle, a real-time status of the drill 901 is obtained, thereby effectively avoiding drill breaking. In another specific embodiment of the present invention, the tire mold drilling working platform further includes a high-frequency proximity switch, where the high-frequency proximity switch is installed on a switch base 1025 fastened to the spindle seat 103; the electric spindle 102 includes a spindle housing 1021 and a spindle rotating shaft 1022; the spindle housing 1021 drives the spindle rotating shaft 1022 to rotate; the spindle rotating shaft 1022 is provided with a detection notch 1023; a sensing surface of the high-frequency proximity switch 1024 penetrates through the spindle housing 1021 and can be positive to the detection notch 1023; and a control system of the tire mold drilling working platform controls start/stop of the spindle housing 1021 and is in signal connection with the high-frequency proximity switch 1024. When the spindle rotating shaft 1022 rotates, the detection notch 1023 or an entity part of the spindle rotating shaft 1022 changes alternately. The high-frequency proximity switch 1024 generates high-low level variable signals, and a period of each change is one rotation. When a tool nose coordinate position of the drill 901 is a negative value, the tool nose has drilled into a surface of the workpiece 7. After the drill 901 is loaded, it is learned through measurement that a rotation speed of the spindle rotating shaft 1022 is decreased. The control system compares a rotation speed of the spindle rotating shaft 1022 measured by the high-frequency proximity switch 1024 with a load mathematic model that has been established inside the control system, and determines, through a difference between rotation speed changes and the position of the drill 901, whether the drill is worn or damaged, so as to effectively determine a drill status and perform early warning.

Because the tire mold drilling working platform uses a high-speed electric spindle to directly drive the drill 901 for drilling, the drill 901 removes chips for hollow inner-cooling high-pressure jet flow. During hole drilling, a large amount of iron chips carried in cooling oil are ejected back at a high speed and impact an end cover of the electric spindle 102 and generate a large amount of oil mist. To prevent oil mist and other liquid from entering an internal coil of the electric spindle 102 and causing a fault, in another specific embodiment of the present invention, the tire mold drilling working platform is provided with air seal structures at a front end and a rear end of the electric spindle 102.

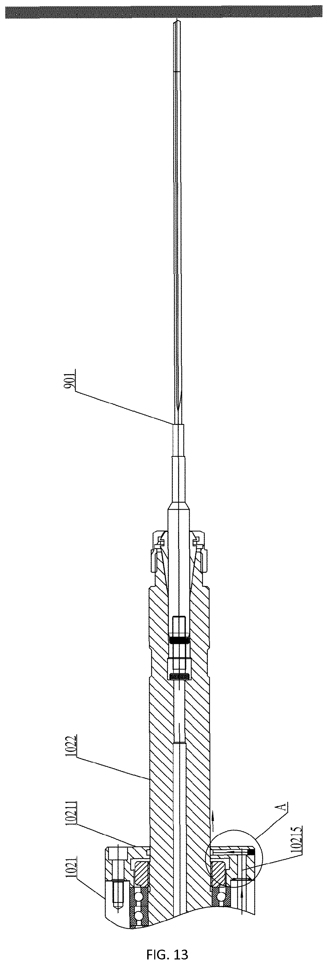

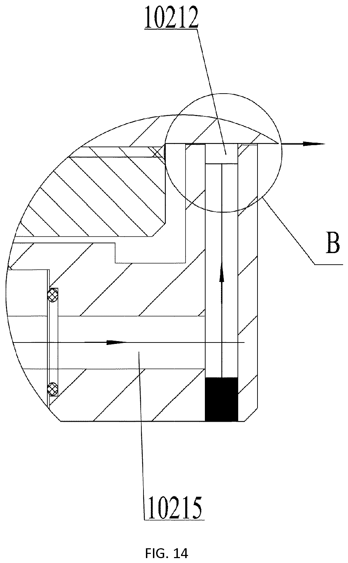

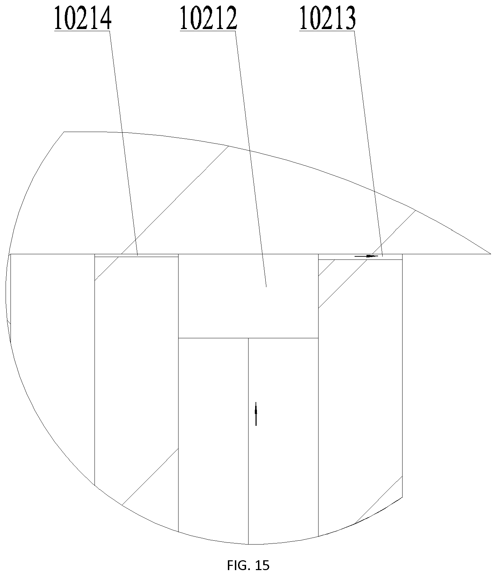

As shown in FIG. 13 to FIG. 15, a front end and a rear end of the spindle housing 1021 are respectively provided with a front end cover 10211 and a rear end cover; the front end cover 10211 is internally provided with a front-end-cover inner hole; the rear end cover is internally provided with a rear-end-cover inner hole; the spindle rotating shaft 1022 freely penetrates through the front-end-cover inner hole and the rear-end-cover inner hole; the spindle rotating shaft 1022 penetrates one end of the front end cover 10211 for installing the drill 901; a first annular groove 10212 is disposed in a circumferential direction of a side wall of the front-end-cover inner hole, a side wall of the front-end-cover inner hole outside the first annular groove 10212 and the spindle rotating shaft 1022 form a first external ring gap 10213, and a side wall of the front-end-cover inner hole inside the first annular groove 10212 and the spindle rotating shaft 1022 form a first inner ring gap 10214; a second annular groove is disposed in a circumferential direction of a side wall of the rear-end-cover inner hole, a side wall of the rear-end-cover inner hole outside the second annular groove and the spindle rotating shaft form a second external ring gap, and a side wall of the rear-end-cover inner hole inside the second annular groove and the spindle rotating shaft form a second inner ring gap; and the spindle housing 1021 is provided with an air channel 10215; two ends of the air channel 10215 are respectively communicated with the first annular groove 10212 and the second annular groove, and the air channel 10215 is connected to dry compressed air from outside. After drying and filtering, decompression, throttling, and control processing by a series of elements, such as an electromagnetic valve are performed on the compressed air, the compressed air respectively flows to the first annular groove 10212 and the second annular groove through the air channel 10215. Electromagnetic valve control is linked with high-pressure jet flow of the drill 901. When high-pressure oil injection is performed, the compressed air also respectively flows to the first annular groove 10212 and the second annular groove through the air channel 10215, and air is ejected outside through using the first external ring gap 10213 and the second external ring gap, and therefore an air seal ring is formed at the first annular groove 10212, the first external ring gap 10213, the second annular groove, and the second external ring gap, to prevent external liquid oil mist from entering the electric spindle 102, so as to ensure safety of internal coils.

In another specific embodiment of the present invention, to make air mainly discharged from the electric spindle 102 through the first external ring gap 10213 and the second external ring gap, reduce discharge of air into the spindle housing 1021 through the first inner ring gap and the second inner ring gap, so as to reduce impact of air flow on the distribution of lubricating oil and cooling oil in the spindle housing 1021. A radial depth of the first inner ring gap is less than that of the first external ring gap 10213, and a radial depth of the second inner ring gap is less than that of the second external ring gap.

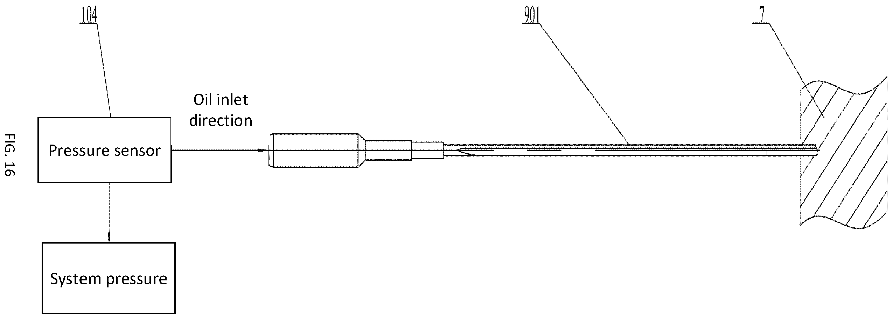

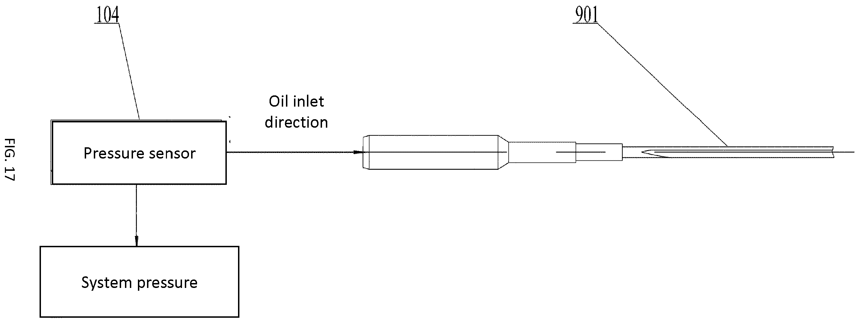

In another specific embodiment of the present invention, as shown in FIG. 16 to FIG. 18, a drill breakage detection system for dynamic cooling pressure monitoring of a drill 901 is provided. A spindle cooling liquid channel is disposed inside the spindle rotating shaft 1022 along an axial direction; a drill cooling liquid channel communicated with the spindle cooling liquid channel is disposed inside the drill 901 along an axial direction; the drill 901 is provided with a cooling liquid through-hole communicated with the drill cooling liquid channel; a rear end of the electric spindle 102 is connected to a cooling pressure dynamic monitoring system, and the cooling pressure dynamic monitoring system includes a pressure sensor 104 and a quantitative oil pump; an oil inlet of the quantitative oil pump is used to connect to a cooling oil source; an oil outlet of the quantitative oil pump is connected to a spindle rotating joint by using a manifold block; a fixing part of the spindle rotating joint is connected to the spindle housing 1021; the fixing part of the spindle rotating joint is connected to the spindle rotating shaft 1022; the spindle rotating joint is communicated with the spindle cooling liquid channel and the oil outlet of the quantitative oil pump; the pressure sensor 104 is connected to a pipeline connecting the quantitative oil pump to the electric spindle. Specifically, the pressure sensor 104 is connected to the manifold block, and the pressure sensor 104 is in signal connection with the control system of the tire mold drilling working platform.

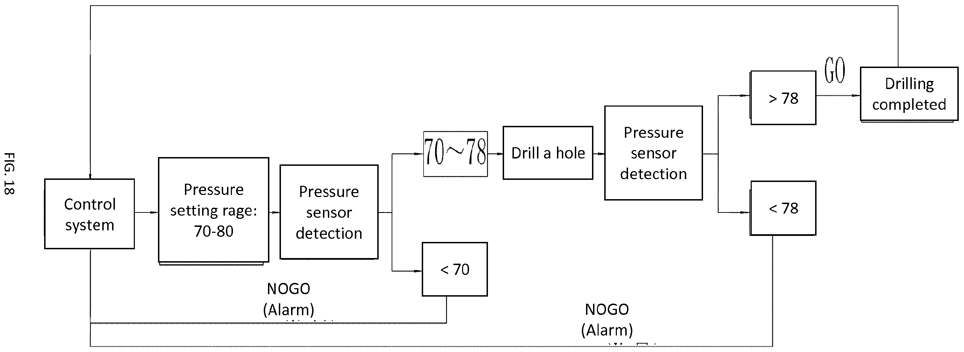

As shown in FIG. 18, according to a drilling characteristic of the drill 901, when a quantitative oil pump is used to provide cooling jet flow of constant discharge and when the drill 901 is outside or inside a workpiece surface, pressure of cooling liquid in a drill hole changes because the drill 901 is wrapped by the drill hole. After the pressure sensor 104 is installed at a rear end of an electric spindle 102, the pressure sensor 104 can acquire in real time pressure of the spindle cooling liquid channel (that is, in a drill hole at an end part of the drill 901). According to real-time coordinate positions, when the drill 901 drills into a workpiece, if the pressure of the spindle cooling liquid channel increases, it indicates that the drill 901 is normal; otherwise, it is determined that the drill 901 has been broken. This improves the alarming accuracy. Pressure of cooling liquid affects use intensity, drilling efficiency, a chip removal effect, and the like of the drill 901. Therefore, when a drill 901 of a model is used to perform drilling on a tire mold 7, to ensure use intensity, drilling efficiency, a chip removal effect, and the like of the drill 901, in a control system, an working pressure range of a cooling system is set to 70-78 MPa, and output pressure of a quantitative oil pump is regulated be in the working pressure range. Cooling oil does not flow smoothly when the drill 901 normally cuts a workpiece, the pressure in the spindle cooling liquid channel should greatly increase. When the drill cuts the workpiece when being broken due to a fault, the broken drill 901 becomes shorter, and the pressure in the spindle cooling liquid channel should greatly decrease. Therefore, before the drill performs drilling, if a pressure value detected by the pressure sensor 104 is within the pressure range set by the system, it is determined that the drill 901 is normal; if the pressure value detected by the pressure sensor 104 is less than the minimum value 70 MPa in the pressure range set by the system, it is determined that the drill 901 is not normal, and a controller triggers an alerter to give an alarm. In a process of performing drilling by the drill, if a pressure value detected by the pressure sensor 104 is much greater than the maximum 78 MPa in the pressure range set by the system, it is determined that the drill 901 is normal; if the detected pressure value is less than the maximum 78 MPa in the pressure range set by the system, it is determined that the drill 901 is not normal, and the controller triggers the alerter to give an alarm. By using the quantitative oil pump, the pressure sensor 104, preset software in the control system, and the like, a set of drill breaking detection system that is very effective for the tire mold drilling platform is formed.

The present invention further provides a tire mold drilling numerical control machine tool, including the tire mold drilling working platform in any embodiment provided in the present invention.

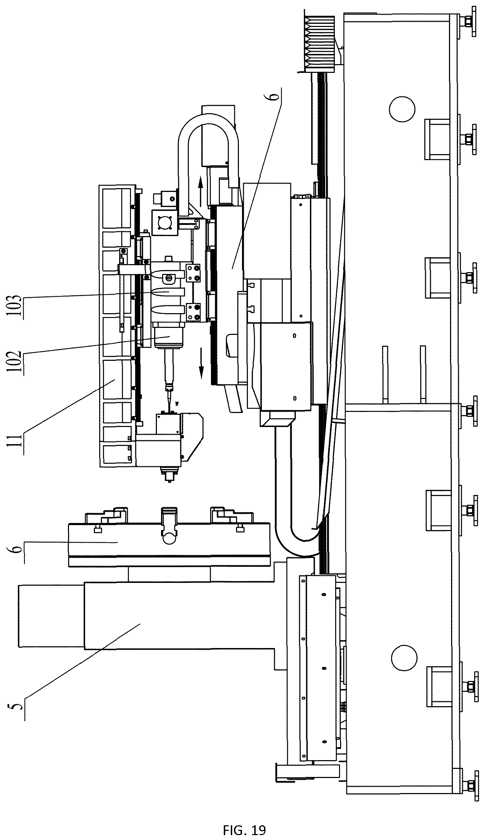

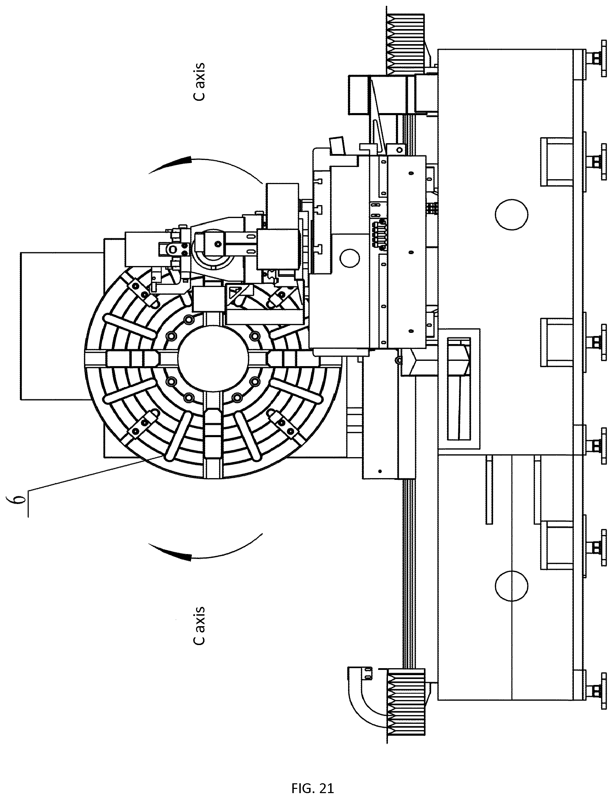

As shown in FIG. 19 and FIG. 21, in an example of a tire mold drilling numerical control machine tool, in order to effectively prevent spraying, atomization, and leakage of high-pressure jet flow, increase an oil mist recovery rate to 99.8%, the tire mold drilling numerical control machine tool is further provided with a metal plate shield and a frame, the frame is disposed below a base and supports the tire mold drilling working platform, the metal plate shield covers the tire mold drilling working platform and the frame, and an oil mist collection and purification separator is disposed on an inner top surface of the metal plate shield. Auxiliary equipment, for example, a high-pressure hydraulic system for providing stable cooled jet flow for a spindle cutting tool and an oil cooler system that can effectively control the temperature of cooling liquid, is disposed around the tire mold drilling numerical control machine tool. The oil mist collection and purification separator collects and purifies high-pressure cooled oil mist, and introduces the collected high-pressure cooled oil to the high-pressure hydraulic system for recycling. The tire mold drilling numerical control machine tool is also provided with a chip removal system used for separating hydraulic oil from chips and a filter system used for removing impurities in the hydraulic oil separated in the chip removal system and used for providing pure hydraulic oil for the high-pressure hydraulic system for use.

Rapid development of the automobile industry also puts forward new requirements and challenges for tire products. Venting of a rubber tire is required in a vulcanization process, and especially at fine decorative patterns, accurate arrangement of vent holes is more needed. For arrangement of a conventional machining process of vent holes of a tire mold in the past, regardless of a two-sectional tire mold or a segmented mold, a technique in which an inner-wall cavity of a tire mode is not drilled outward and a twist drill is used as a cutting tool. Due to a limitation of a technique of drilling from inside to outside, manual drilling needs to be used, poor accuracy and low efficiency are caused, a hole size and coaxiality are not well ensured, and product quality is poor. For example, after a high-end five-axis machining center is used to decompose an annular mold, an inner-cooling twist drill is used for drilling. A hole size is not well controlled either, the hole surface quality is poor, and a problem of continuous drilling of a single mold base still cannot be resolved. A mold is divided into several blocks for drilling machining. Mold restructuring is performed after segmentation, precision cannot be ensured, huge equipment investment is required, and the efficiency is not high.

In order to resolve the foregoing technical problem, the present invention further provides a tire mold vent hole machining method. The tire mold drilling numerical control machine tool in the present invention is used for machining vent holes of a tire mold. An electric spindle assembly 10 includes an electric spindle 102 and a spindle seat 103, where the spindle seat 103 is fixedly connected to a U-axis carriage 13, the electric spindle 102 is fixedly connected to the spindle seat 103, a following slide arm 11 is slidably connected to the spindle seat 103, a guide sleeve seat 81 is disposed at a position that is in the following slide arm 11 and that is corresponding to a drill 901, a guide sleeve 82 for guiding the drill 901 is sleeved in the guide sleeve seat 81, and a guide hole matching the drill 901 is disposed inside the guide sleeve 82. The tire mold vent hole machining method includes the following steps:
Step 1: Machine a positioning groove 71 for each corresponding vent hole on a surface of the tire mold, where a bottom surface of the positioning groove 71 is perpendicular to an axis 72 of a to-be-machined vent hole.
Step 2: Make an outer end surface of the guide sleeve 82 attached to the bottom surface of the positioning groove 71, and allow the drill 901 to drill a hole from an outer surface of the tire mold to an interior of the tire mold to obtain a vent hole, and place a vent hole cover in each vent hole.

According to the method, the tire mold is drilled inward from an outer surface of an annular tire mold blank, and the positioning groove is obtained through cutting in advance on an end surface and an outer circle. A surface of the positioning groove 71 is perpendicular to an axis of a drilled hole, which is convenient for guiding drilling of a single-edged gun drill. Patterns can be etched in a segmented tire mold after all vent holes of the segmented tire mold are drilled, and finally the tire mold is cut into blocks. This improves the machining efficiency of the tire mold and effectively resolves a problem of continuous automatic machining during tire mold drilling. For a vent hole corresponding to a vent hole cover of a two-sectional tire mold, drilling the hole from the outside can effectively avoid interference by itself. An axis of the hole is completely parallel to a normal line of a tire curved surface, which is more conducive to smooth inlaying of the vent hole cover into the vent hole. The vent hole cover is placed in the vent hole. This can make the tire mold not only effectively vent air in a molding process of a tire, but also cannot form a rubber ventilation column on an outer surface of the tire, so that a surface of the molded tire is more smooth. This method can also be perfectly adapted to vent hole drilling on a side plate of a segmented tire mold. A hole machined by a single-edge deep hole drill not only has a smooth surface with roughness Ra below 0.2 µm and has hole tolerance less than 0.01 mm, but also have more obvious advantages in vent hole machining of various tire molds.

It should be noted that a number of iron chip guiding device in the tire mold drilling numerical control machine tool is not limited to 2, and any number can be set according to actual machining requirements; a position of an iron chip guiding device does not necessarily have to be set on a side of a base, and may alternatively be set on the base, as long as it can implement cleaning and collection of iron chips; a drive device of each axis is not limited to a lead screw drive, as long as it can implement movement of each axis; a device for measuring a spindle cooling liquid channel is not limited to a pressure sensor, as long as it can collect pressure in the spindle cooling liquid channel (that is, in a drill hole at an end part of a drill) in real time; and the device can be adjusted according to an actual situation.

## Claims

1. A tire mold drilling working platform, comprising: a base (3); a drill positioning X-axis assembly disposed on the base (3); a drill swing angle A-axis assembly being disposed on the drill positioning X-axis assembly; a drill feed U-axis assembly being disposed on the drill swing angle A-axis assembly; an electric spindle assembly (10) being disposed on the drill feed U-axis assembly; a drill being disposed on the electric spindle assembly (10); the drill positioning X-axis assembly being configured to implement positioning of the drill and a workpiece (7) in a diameter direction of the workpiece (7); the drill swing angle A-axis assembly being configured to control a swing angle of the drill; the drill feed U-axis assembly being configured to implement feed of the drill and control a drilling depth; **characterized in that** the tire mold drilling working platform further comprises: a workpiece movement Z-axis assembly being further disposed on the base (3); a workpiece rotation C-axis assembly being disposed on the workpiece movement Z-axis assembly; wherein the workpiece movement Z-axis assembly is configured to implement positioning of the workpiece (7) and the drill in an axial direction of the workpiece (7); the tire mold drilling working platform further comprising: a chuck assembly (6) used for installing the workpiece (7) being disposed on the workpiece rotation C-axis assembly; and wherein the workpiece rotation C-axis assembly is configured to implement positioning of the workpiece (7) and the drill in a circumferential direction of the workpiece (7).

2. The tire mold drilling working platform according to claim 1, wherein the drill positioning X-axis assembly comprises an X-axis carriage (15), an X-axis guide rail assembly (16), and an X-axis lead screw assembly (17); the X-axis guide rail assembly (16) is disposed on the base (3); the X-axis carriage (15) is slidably connected to the X-axis guide rail assembly (16); the X-axis carriage (15) is connected to a lead screw nut of the X-axis lead screw assembly (17); and the X-axis lead screw assembly (17) can drive the X-axis carriage (15) to slide along the X-axis guide rail assembly (16), Preferably, the drill swing angle A-axis assembly comprises a fixing plate (121) and a turnplate (122) disposed on the fixing plate (121), and the fixing plate (121) is fastened to the X-axis carriage (15).

3. The tire mold drilling working platform according to claim 2, wherein the drill feed U-axis assembly comprises a U-axis carriage (13), a U-axis guide rail assembly (14), and a U-axis lead screw assembly (19); the U-axis guide rail assembly (14) is disposed on the turnplate (122); the U-axis carriage (13) is slidably connected to the U-axis guide rail assembly (14); the U-axis carriage (13) is connected to a lead screw nut of the U-axis lead screw assembly (19); and the U-axis lead screw assembly (19) can drive the U-axis carriage (13) to slide along the U-axis guide rail assembly (14).

4. The tire mold drilling working platform according to claim 1, wherein the workpiece movement Z-axis assembly comprises a Z-axis carriage, a Z-axis guide rail assembly (2), and a Z-axis lead screw assembly (1); the Z-axis guide rail assembly (2) is disposed on the base (3); the Z-axis carriage is slidably connected to the Z-axis guide rail assembly (2); the Z-axis carriage is connected to a lead screw nut of the Z-axis lead screw assembly (1); and the Z-axis lead screw assembly (1) can drive the Z-axis carriage to slide along the Z-axis guide rail assembly (2).

5. The tire mold drilling working platform according to claim 4, wherein the workpiece rotation C-axis assembly comprises a C-axis rotating table (5) and a chuck assembly (6); a chuck base of the chuck assembly (6) is fastened to the C-axis rotating table (5); the C-axis rotating table (5) is fastened to the Z-axis carriage, and follows the Z-axis carriage to move; and the chuck assembly (6) drives, through a motor, the workpiece (7) to rotate, to implement positioning of the workpiece (7) and the drill in the circumferential direction of workpiece (7).

6. The tire mold drilling working platform according to claim 3, wherein the electric spindle assembly (10) is disposed on the U-axis carriage (13); a clamp assembly being disposed on the electric spindle assembly (10); wherein the drill is disposed on the clamp assembly; an upper part of the electric spindle assembly (10) being further connected to a following slide arm (11); one end that is close to the workpiece (7) and that is of the following slide arm (11) being provided with a drill guide device (8); and wherein the drill guide device (8) is configured to guide the drill, preferably, the base (3) being provided with an iron chip guiding device (18), and wherein there are two iron chip guiding devices (18).

7. The tire mold drilling working platform according to claim 6, wherein the electric spindle assembly (10) comprises an electric spindle (102) and a spindle seat (103), wherein the spindle seat (103) is fixedly connected to the U-axis carriage (13); the electric spindle (102) is fixedly connected to the spindle seat (103); the following slide arm (11) is slidably connected to the spindle seat (103); the drill guide device (8) comprises a guide sleeve base (81) and a guide sleeve (82); the guide sleeve seat is disposed at a position that is in the following slide arm (11) and that is corresponding to the drill (901), a guide sleeve (82) for guiding the drill (901) is sleeved in the guide sleeve seat and an outer end of the guide sleeve (82) extends outside the guide sleeve seat, and a guide hole matching the drill (901) is disposed inside the guide sleeve (82).

8. The tire mold drilling working platform according to claim 7, further comprising a guide sleeve compression device (821), wherein the guide sleeve compression device (821) comprises a cylinder (8211), a two-position five-way valve (8212), an air reservoir (8213), and a pressure controller (8214); the following slide arm (11) is slidably connected to the spindle seat (103); the cylinder (8211) is fastened to an upper part of the spindle seat (103), and an axial direction of a piston rod of the cylinder (8211) is parallel to an axial direction of the drill (901); a free end of the piston rod of the cylinder (8211) is in threaded connection with a cylinder ball head (8215); the cylinder ball head (8215) can be in contact with a front seat (8216) disposed on the following slide arm (11); an air inlet end of the air reservoir (8213) is used for connecting to a compressed air source; an air outlet end of the air reservoir (8213) is connected to an air inlet of the two-position five-way valve (8212); two air outlets of the two-position five-way valve (8212) are respectively connected to a rodless cavity and a rod cavity of the cylinder (8211); two exhaust ports of the two-position five-way valve (8212) each are communicated with air; the pressure controller (8214) is disposed on a pipeline connecting the air reservoir (8213) to the compressed air source; and a one-way valve (8217) that makes air from the air source unidirectionally flow into the air reservoir (8213) is disposed on a pipeline between the air reservoir (8213) and the pressure controller (8214), Preferably, an air source FRL (8218) is disposed on a pipeline connecting the pressure controller (8214) to the compressed air source, and a flow-limiting valve is disposed in each of a pipeline connecting the two-position five-way valve (8212) to the rodless cavity of the cylinder (8211) and a pipeline connecting the two-position five-way valve (8212) to the rod-cavity of the cylinder (8211).

9. The tire mold drilling working platform according to claim 7, wherein the following slide arm (11) forms a slip connection with the spindle seat (103) by using a slide arm guide rail (111); a screw regulation seat (1031) being further fastened to the spindle seat (103); the screw regulation seat (1031) being in threaded connection with a limiting regulating stem (1032); an axial direction of the limiting regulating stem (1032) is parallel to an axial direction of the drill (901); a supporting seat (112) being fastened to the following slide arm (11); the supporting seat (112) being provided with a limiting swing block (113); and limiting swing block (113) and the supporting seat (112) form a rotational connection parallel to the axial direction of the limiting regulating stem (1032).

10. The tire mold drilling working platform according to claim 7, further comprising a high-frequency proximity switch (1024), wherein the high-frequency proximity switch (1024) is installed on a switch base (1025) fastened to the spindle seat (103); the electric spindle (102) comprises a spindle housing (1021) and a spindle rotating shaft (1022); the spindle housing drives the spindle rotating shaft (1022) to rotate; the spindle rotating shaft (1022) is provided with a detection notch (1023); a sensing surface of the high-frequency proximity switch (1024) penetrates through the spindle housing (1021) and can be positive to the detection notch (1023); and a control system of the tire mold drilling working platform controls start/stop of the spindle housing (1021) and is in signal connection with the high-frequency proximity switch (1024), to monitor a rotation speed of the spindle rotating shaft (1022).

11. The tire mold drilling working platform according to claim 10, wherein a front end and a rear end of the spindle housing (1021) are respectively provided with a front end cover (10211) and a rear end cover, the front end cover (10211) is internally provided with a front-end-cover inner hole, the rear end cover is internally provided with a rear-end-cover inner hole, the spindle rotating shaft (1022) freely penetrates through the front-end-cover inner hole and the rear-end-cover inner hole, and the spindle rotating shaft (1022) penetrates through one end of the front end cover (10211) for installing the drill (901); a first annular groove (10212) is disposed in a circumferential direction of a side wall of the front-end-cover inner hole, a side wall of the front-end-cover inner hole outside the first annular groove (10212) and the spindle rotating shaft (1022) form a first external ring gap (10213), and a side wall of the front-end-cover inner hole inside the first annular groove (10212) and the spindle rotating shaft (1022) form a first inner ring gap (10214); a second annular groove is disposed in a circumferential direction of a side wall of the rear-end-cover inner hole, a side wall of the rear-end-cover inner hole outside the second annular groove and the spindle rotating shaft (1022) form a second external ring gap, and a side wall of the rear-end-cover inner hole inside the second annular groove and the spindle rotating shaft (1022) form a second inner ring gap; and the spindle housing (1021) is provided with an air channel (10215); two ends of the air channel (10215) are respectively communicated with the first annular groove (10212) and the second annular groove, and the air channel (10215) is connected to dry compressed air from outside, Preferably, a radial depth of the first inner ring gap (10214) is smaller than that of the first external ring gap (10213), and a radial depth of the second inner ring gap is smaller than that of the second external ring gap.

12. The tire mold drilling working platform according to claim 10, wherein a spindle cooling liquid channel is disposed inside the spindle rotating shaft (1022) along an axial direction, a drill cooling liquid channel communicated with the spindle cooling liquid channel is disposed inside the drill (901) along an axial direction, and the drill (901) is provided with a cooling liquid through-hole communicated with the drill cooling liquid channel; a rear end of the electric spindle (102) is connected to a cooling pressure dynamic monitoring system; the cooling pressure dynamic monitoring system comprises a pressure sensor (104) and a quantitative oil pump; an oil inlet of the quantitative oil pump is used to connect to a cooling oil source; an oil outlet of the quantitative oil pump is connected to the electric spindle (102) by using a spindle rotating joint, and the spindle rotating joint is communicated with the spindle cooling liquid channel and the oil outlet of the quantitative oil pump; and the pressure sensor (104) is connected to a pipeline connecting the quantitative oil pump and the electric spindle (102), and the pressure sensor (104) in signal connection with the control system of the tire mold drilling working platform.

13. A tire mold drilling numerical control machine tool, comprising the tire mold drilling working platform according to any one of claims 1 to 12.

14. The tire mold drilling numerical control machine tool according to claim 13, further comprising a metal plate shield and a frame, wherein the frame is disposed below a base (3) and supports the tire mold drilling working platform; the metal plate shield covers the tire mold drilling working platform and the frame; and an oil mist collection and purification separator is disposed on an inner top surface of the metal plate shield.

15. A tire mold vent hole machining method, wherein the tire mold drilling numerical control machine tool according to either of claims 13 and 14 is used for machining vent holes of a tire mold, an electric spindle assembly (10) comprising an electric spindle (102) and a spindle seat (103); the spindle seat (103) being fixedly connected to a U-axis carriage (13); wherein the electric spindle (102) is fixedly connected to the spindle seat (103); a following slide arm (11) being slidably connected to the spindle seat (103); a guide sleeve seat being disposed at a position that is in the following slide arm (11) and that is corresponding to a drill (901); a guide sleeve (82) for guiding the drill (901) being sleeved in the guide sleeve seat, and a guide hole matching the drill (901) is disposed inside the guide sleeve (82); and the method comprises the following steps:
step 1. machining a positioning groove (71) for each corresponding vent hole on an outer surface of the tire mold, wherein a bottom surface of the positioning groove (71) is perpendicular to an axis of a to-be-machined vent hole; and
step 2. making an outer end surface of the guide sleeve (82) attached to the bottom surface of the positioning groove (71), and allowing the drill (901) to drill a hole from an outer surface of the tire mold to an interior of the tire mold to obtain a vent hole.

## Patentansprüche

1. Arbeitsplattform zum Bohren von Reifengussformen, umfassend:
eine Basis (3) und eine auf der Basis (3) angeordnete X-Achsen-Bohrerpositionierungsanordnung;
eine A-Achsen-Bohrerschwenkwinkelanordnung, die auf der X-Achsen-Bohrerpositionierungsanordnung angeordnet ist;
eine U-Achsen-Bohrvorschubanordnung, die auf der A-Achsen-Bohrerschwenkwinkelanordnung angeordnet ist;
eine elektrische Spindelanordnung (10), die auf der U-Achsen-Bohrervorschubanordnung angeordnet ist;
einen Bohrer, der auf der elektrischen Spindelanordnung (10) angeordnet ist; wobei
die X-Achsen-Bohrerpositionierungsanordnung ausgebildet ist, um eine Positionierung des Bohrers und eines Werkstücks (7) in einer Durchmesserrichtung des Werkstücks (7) zu realisieren;
die A-Achsen-Bohrerschwenkwinkelanordnung ausgebildet ist, einen Schwenkwinkel des Bohrers zu steuern;
die U-Achsen-Bohrervorschubanordnung ausgebildet ist, um einen Vorschub des Bohrers zu realisieren und eine Bohrtiefe zu steuern;
**dadurch gekennzeichnet, dass** die Arbeitsplattform zum Bohren von Reifengussformen weiter umfasst:
eine Z-Achsen-Werkstückbewegungsanordnung, die auch auf der Basis (3) angeordnet ist;
eine C-Achsen-Werkstückrotationsanordnung, die auf der Z-Achsen-Werkstückbewegungsanordnung angeordnet ist;
wobei
die Z-Achsen-Werkstückbewegungsanordnung ausgebildet ist, um eine Positionierung des Werkstücks (7) und des Bohrers in einer axialen Richtung des Werkstücks (7) zu realisieren;
die Arbeitsplattform zum Bohren von Reifengussformen weiter umfasst:
eine Spannfutteranordnung (6), die zum Halten des Werkstücks (7) verwendet wird, das auf der C-Achsen-Werkstückrotationsanordnung angeordnet ist; und
wobei die C-Achsen-Werkstückrotationsanordnung ausgebildet ist, um eine Positionierung des Werkstücks (7) und des Bohrers in einer Umfangsrichtung des Werkstücks (7) zu realisieren.

2. Arbeitsplattform zum Bohren von Reifengussformen nach Anspruch 1, wobei die X-Achsen-Bohrerpositionierungsanordnung einen X-Achsen-Schlitten (15), eine X-Achsen-Führungsschienenanordnung (16) und eine X-Achsen-Gewindespindelanordnung (17) umfasst; die X-Achsen-Führungsschienenanordnung (16) auf der Basis (3) angeordnet ist; der X-Achsen-Schlitten (15) verschiebbar mit der X-Achsen-Führungsschienenanordnung (16) verbunden ist; der X-Achsen-Schlitten (15) mit einer Leitspindelmutter der X-Achsen-Leitspindelanordnung (17) verbunden ist; und die X-Achsen-Leitspindelanordnung (17) den X-Achsen-Schlitten (15) antreiben kann, um entlang der X-Achsen-Führungsschienenanordnung (16) zu gleiten, und bevorzugt die A-Achsen-Bohrerschwenkwinkelanordnung eine Befestigungsplatte (121) und eine Drehplatte (122) umfasst und die Befestigungsplatte (121) am X-Achsen-Schlitten (15) befestigt ist.

3. Arbeitsplattform zum Bohren von Reifengussform nach Anspruch 2, wobei die U-Achsen-Bohrvorschubanordnung einen U-Achsen-Schlitten (13), eine U-Achsen-Führungsschienenanordnung (14) und eine U-Achsen-Gewindespindelanordnung (19) umfasst; die U-Achsen-Führungsschienenanordnung (14) auf der Drehplatte (122) angeordnet ist; der U-Achsen-Schlitten (13) verschiebbar mit der U-Achsen-Führungsschienenanordnung (14) verbunden ist; der U-Achsen-Schlitten (13) mit einer Leitspindelmutter der U-Achsen-Leitspindelanordnung (19) verbunden ist; und die U-Achsen-Gewindespindelanordnung (19) den U-Achsen-Schlitten (13) so antreiben kann, dass er entlang der U-Achsen-Führungsschienenanordnung (14) gleitet.

4. Arbeitsplattform zum Bohren von Reifengussformen nach Anspruch 1, wobei die Z-Achsen-Werkstückbewegungsanordnung einen Z-Achsen-Schlitten, eine Z-Achsen-Führungsschienenanordnung (2) und eine Z-Achsen-Leitspindelanordnung (1) umfasst; die Z-Achsen-Führungsschienenanordnung (2) auf der Basis (3) angeordnet ist; der Z-Achsen-Schlitten verschiebbar mit der Z-Achsen-Führungsschienenanordnung (2) verbunden ist; der Z-Achsen-Schlitten mit einer Leitspindelmutter der Z-Achsen-Leitspindelanordnung (1) verbunden ist; und die Z-Achsen-Leitspindelanordnung (1) den Z-Achsen-Schlitten so antreiben kann, dass er entlang der Z-Achsen-Führungsschienenanordnung (2) gleitet.

5. Arbeitsplattform zum Bohren von Reifengussformen nach Anspruch 4, wobei die C-Achsen-Werkstückrotationsanordnung einen C-Achsen-Drehtisch (5) und eine Spannfutteranordnung (6) umfasst; eine Spannfutterbasis der Spannfutteranordnung (6) an dem C-Achsen-Drehtisch (5) befestigt ist; der C-Achsen-Drehtisch (5) an dem Z-Achsen-Schlitten befestigt ist und dem Z-Achsen-Schlitten folgt, um sich zu bewegen; und die Spannfutteranordnung (6) durch einen Motor das Werkstück (7) drehend antreibt, um eine Positionierung des Werkstücks (7) und des Bohrers in der Umfangsrichtung des Werkstücks (7) zu realisieren.

6. Arbeitsplattform zum Bohren von Reifengussformen nach Anspruch 3, wobei die elektrische Spindelanordnung (10) auf dem U-Achsen-Schlitten (13) angeordnet ist; eine Klemmanordnung an der elektrischen Spindelanordnung (10) angeordnet ist; wobei der Bohrer an der Klemmanordnung angeordnet ist; ein oberer Teil der elektrischen Spindelanordnung (10) ferner mit einem nachfolgenden Gleitarm (11) verbunden ist; ein Ende, das nahe am Werkstück (7) ist und zum nachfolgenden Gleitarm (11) gehört, mit einer Bohrerführungsvorrichtung (8) versehen ist; und wobei die Bohrerführungsvorrichtung (8) dazu ausgebildet ist, den Bohrer zu führen, wobei bevorzugt die Basis (3) mit einer Führungsvorrichtung (18) für Eisenspäne versehen ist und wobei zwei Führungsvorrichtungen (18) für Eisenspäne vorhanden sind.

7. Arbeitsplattform zum Bohren von Reifengussformen nach Anspruch 6, wobei die elektrische Spindelanordnung (10) eine elektrische Spindel (102) und einen Spindelsitz (103) umfasst, wobei der Spindelsitz (103) fest mit dem U-Achsen-Schlitten (13) verbunden ist; die elektrische Spindel (102) fest mit dem Spindelsitz (103) verbunden ist; der nachfolgende Gleitarm (11) verschiebbar mit dem Spindelsitz (103) verbunden ist; die Bohrführungsvorrichtung (8) eine Führungshülsenbasis (81) und eine Führungshülse (82) umfasst; der Führungshülsensitz an einer Position angeordnet ist, die sich in dem nachfolgenden Gleitarm (11) befindet und die dem Bohrer (901) entspricht, eine Führungshülse (82) zum Führen des Bohrers (901) in den Führungshülsensitz eingeschoben ist und ein äußeres Ende der Führungshülse (82) sich außerhalb des Führungshülsensitzes erstreckt, und ein zum Bohrer (901) passendes Führungsloch innerhalb der Führungshülse (82) angeordnet ist.

8. Arbeitsplattform zum Bohren von Reifengussformen nach Anspruch 7, ferner umfassend eine Führungshülsen-Kompressionsvorrichtung (821), wobei die Führungshülsen-Kompressionsvorrichtung (821) einen Zylinder (8211), ein Zweistellungs-Fünfwegeventil (8212), einen Luftbehälter (8213) und einen Druckregler (8214) umfasst; der nachfolgende Gleitarm (11) verschiebbar mit dem Spindelsitz (103) verbunden ist; der Zylinder (8211) an einem oberen Teil des Spindelsitzes (103) befestigt ist und eine axiale Richtung einer Kolbenstange des Zylinders (8211) parallel zu einer axialen Richtung des Bohrers (901) ist; ein freies Ende der Kolbenstange des Zylinders (8211) in Gewindeverbindung mit einem Zylinderkugelkopf (8215) steht; der Zylinderkugelkopf (8215) mit einem am nachfolgenden Gleitarm (11) angeordneten Vordersitz (8216) in Kontakt stehen kann; ein Lufteinlassende des Luftbehälters (8213) zum Anschließen an eine Druckluftquelle eingesetzt ist; ein Luftauslassende des Luftbehälters (8213) mit einem Lufteinlass des zwei Stellungs-Fünfwegeventils (8212) verbunden ist; zwei Luftauslässe des Zweistellungs-Fünfwegeventils (8212) jeweils mit einem stangenlosen Hohlraum und einem Stangenhohlraum des Zylinders (8211) verbunden sind; zwei Auslassöffnungen des zwei Positions-Fünfwegeventils (8212) jeweils mit Luft in Verbindung stehen; der Druckregler (8214) an einer Rohrleitung angeordnet ist, die den Luftbehälter (8213) mit der Druckluftquelle verbindet; und ein Einwegventil (8217), das Luft von der Luftquelle unidirektional in das Luftbehälter (8213) strömen lässt, an einer Rohrleitung zwischen dem Luftbehälter (8213) und dem Druckregler (8214) angeordnet ist, und bevorzugt eine Luftquelle FRL (8218) an einer Rohrleitung angeordnet ist, die den Druckregler (8214) mit der Druckluftquelle verbindet, und ein Durchflussbegrenzungsventil in jeder Rohrleitung angeordnet ist, die das zwei Stellungs-fünf Wege-Ventil (8212) mit dem stangenlosen Hohlraum des Zylinders (8211) verbindet, und eine Rohrleitung, die das zwei Stellungs-Fünfwegeventil (8212) mit dem Stangenhohlraum des Zylinders (8211) verbindet.

9. Arbeitsplattform zum Bohren von Reifengussformen nach Anspruch 7, wobei der nachfolgende Gleitarm (11) eine Gleitverbindung mit dem Spindelsitz (103) bildet, indem eine Gleitarm-Führungsschiene (111) eingesetzt ist; wobei ein Schraubenregulierungssitz (1031) ferner an dem Spindelsitz (103) befestigt ist; wobei der Schraubenreguliersitz (1031) in Gewindeverbindung mit einem begrenzenden Regulierheck (1032) steht; eine axiale Richtung des Begrenzungsregulierhecks (1032) parallel zu einer axialen Richtung des Bohrers (901) ist; am nachfolgenden Gleitarm (11) ein Stützsitz (112) befestigt ist; der Stützsitz (112) mit einem begrenzenden Schwenkblock (113) versehen ist; und der Begrenzungsschwingblock (113) und der Stützsitz (112) eine Drehverbindung parallel zur axialen Richtung des Begrenzungsregulierhecks (1032) bilden.

10. Arbeitsplattform zum Bohren von Reifengussformen nach Anspruch 7, ferner umfassend einen Hochfrequenz-Näherungsschalter (1024), wobei der Hochfrequenz-Näherungsschalter (1024) auf einer Schalterbasis (1025) installiert ist, die an dem Spindelsitz (103) befestigt ist; die elektrische Spindel (102) ein Spindelgehäuse (1021) und eine Spindeldrehwelle (1022) umfasst; das Spindelgehäuse die Spindelrotationswelle (1022) drehend antreibt; die Spindeldrehwelle (1022) mit einer Erfassungskerbe (1023) versehen ist; eine Erfassungsfläche des Hochfrequenz-Näherungsschalters (1024) das Spindelgehäuse (1021) durchdringt und gegenüber der Erfassungskerbe (1023) positiv sein kann; und ein Steuersystem der Arbeitsplattform zum Bohren der Reifengussformen den Start/Stopp des Spindelgehäuses (1021) steuert und in Signalverbindung mit dem Hochfrequenz-Näherungsschalter (1024) steht, um eine Drehzahl der Spindeldrehwelle (1022) zu überwachen.

11. Arbeitsplattform zum Bohren von Reifengussformen nach Anspruch 10, wobei ein vorderes Ende und ein hinteres Ende des Spindelgehäuses (1021) jeweils mit einer vorderen Endabdeckung (10211) und einer hinteren Endabdeckung versehen sind, wobei die vordere Endabdeckung (10211) innen mit einer vorderen Endabdeckung versehen ist, die hintere Endabdeckung innen mit einem hinteren Endabdeckungsinnenloch versehen ist, die Spindeldrehwelle (1022) frei durch das vordere Endabdeckungsinnenloch und das hintere Endabdeckungsinnenloch ragt, und die Spindeldrehwelle (1022) durch ein Ende der vorderen Endabdeckung (10211) zum Installieren des Bohrers (901) ragt; eine erste ringförmige Nut (10212) in einer Umfangsrichtung einer Seitenwand des Innenlochs der vorderen Abdeckung angeordnet ist, eine Seitenwand des inneren Lochs der vorderen Endabdeckung außerhalb der ersten ringförmigen Nut (10212) und die Spindeldrehwelle (1022) einen ersten äußeres Ringspalt (10213) bilden, und eine Seitenwand des Innenlochs der vorderen Endabdeckung innerhalb der ersten Ringnut (10212) und die Spindeldrehwelle (1022) einen ersten Innenringspalt (10214) bilden; eine zweite ringförmige Nut in einer Umfangsrichtung einer Seitenwand des Innenlochs der hinteren Abdeckung angeordnet ist, eine Seitenwand des inneren Lochs der hinteren Abdeckung außerhalb der zweiten ringförmigen Nut und die Spindeldrehwelle (1022) einen zweiten äußeres Ringspalt bilden, und eine Seitenwand des Innenlochs der hinteren Endabdeckung innerhalb der zweiten Ringnut und die Spindeldrehwelle (1022) einen zweiten inneren Ringspalt bilden; und das Spindelgehäuse (1021) mit einem Luftkanal (10215) versehen ist; zwei Enden des Luftkanals (10215) jeweils mit der ersten Ringnut (10212) und der zweiten Ringnut in Verbindung stehen, und der Luftkanal (10215) mit trockener Druckluft von außen verbunden ist, und bevorzugt eine radiale Tiefe des ersten inneren Ringspalts (10214) kleiner als die des ersten äußeren Ringspalts (10213) ist und eine radiale Tiefe des zweiten inneren Ringspalts kleiner als die des zweiten äußeren Ringspaltes ist.

12. Arbeitsplattform zum Bohren von Reifengussformen nach Anspruch 10, wobei ein Spindelkühlflüssigkeitskanal innerhalb der Spindeldrehwelle (1022) entlang einer axialen Richtung angeordnet ist, wobei ein Bohrerkühlflüssigkeitskanal, der mit dem Spindelkühlflüssigkeitskanal verbunden ist, innerhalb des Bohrers (901) entlang einer axialen Richtung angeordnet ist und der Bohrer (901) mit einem Kühlflüssigkeitsdurchgangsloch versehen ist, das mit dem Bohrerkühlflüssigkeitskanal in Verbindung steht; ein hinteres Ende der elektrischen Spindel (102) mit einem Kühldruckdynamik-Überwachungssystem verbunden ist; das Überwachungssystem der Kühldruckdynamik einen Drucksensor (104) und eine quantitative Ölpumpe umfasst; ein Öleinlass der quantitativen Ölpumpe eingesetzt ist, um mit einer Kühlölquelle verbunden zu werden; ein Ölauslass der quantitativen Ölpumpe mit der elektrischen Spindel (102) unter Verwendung einer Spindeldrehverbindung verbunden ist, und die Spindeldrehverbindung mit dem Spindelkühlflüssigkeitskanal und dem Ölauslass der quantitativen Ölpumpe in Verbindung steht; und der Drucksensor (104) mit einer Rohrleitung verbunden ist, die die quantitative Ölpumpe und die elektrische Spindel (102) verbindet, und der Drucksensor (104) in Signalverbindung mit dem Steuersystem der Arbeitsplattform zum Bohren von Reifengussformen steht.

13. Numerisch gesteuerte Werkzeugmaschine zum Bohren von Reifengussformen, die die Arbeitsplattform zum Bohren von Reifengussformen nach einem der Ansprüche 1 bis 12 umfasst.

14. Numerisch gesteuerte Werkzeugmaschine zum Bohren von Reifengussformen nach Anspruch 13, ferner umfassend eine Metallplattenabschirmung und einen Rahmen, wobei der Rahmen unter einer Basis (3) angeordnet ist und die Arbeitsplattform zum Bohren von Reifengussformen trägt; die Metallplattenabschirmung die Arbeitsplattform zum Bohren von Reifengussformen und den Rahmen bedeckt; und ein Ölnebel-Sammel- und -Reinigungsseparator auf einer inneren oberen Oberfläche der Metallplattenabschirmung angeordnet ist.

15. Spanendes Bearbeitungsverfahren für Entlüftungslöcher in Reifengussformen, wobei die numerisch gesteuerte Werkzeugmaschine zum Bohren von Reifengussformen nach einem der Ansprüche 13 und 14 verwendet wird zum spanenden Bearbeiten von Entlüftungslöchern einer Reifengussform, wobei eine elektrische Spindelanordnung (10) eine elektrische Spindel (102) und eine Spindelaufnahme (103) umfasst; wobei die Spindelaufnahme (103) fest mit einem U-Achsen-Schlitten (13) verbunden ist; wobei die elektrische Spindel (102) fest mit der Spindelaufnahme (103) verbunden ist; ein nachfolgender Gleitarm (11) verschiebbar mit der Spindelaufnahme (103) verbunden ist; ein Führungshülsensitz an einer Position angeordnet ist, die sich in dem nachfolgenden Gleitarm (11) befindet und die einem Bohrer (901) entspricht; wobei eine Führungshülse (82) zum Führen des Bohrers (901) in den Führungshülsensitz eingesetzt ist und ein zum Bohrer (901) passendes Führungsloch innerhalb der Führungshülse (82) angeordnet ist; und das Verfahren die folgenden Schritte umfasst:
Schritt 1: Spanendes Bearbeiten einer Positionierungsnut (71) für jedes entsprechende Entlüftungsloch auf einer Außenfläche der Reifengussform, wobei eine Bodenfläche der Positionierungsnut (71) senkrecht zu einer Achse eines spanend herzustellenden Entlüftungslochs ist; und
Schritt 2: Herstellen einer äußeren Endfläche der Führungshülse (82), die an der Bodenfläche der Positionierungsnut (71) angebracht ist, und dem Bohrer (901) ermöglicht, ein Loch von einer äußeren Fläche der Reifengussform zu einem Inneren der Reifengussform zu bohren, um ein Entlüftungsloch zu erhalten.

## Revendications

1. Plateforme de travail de perçage de moule pour pneu, comprenant: une base (3) ; un ensemble d'axe X de positionnement de foret disposé sur la base (3) ; un ensemble d'axe A d'angle d'oscillation de foret étant disposé sur l'ensemble d'axe X de positionnement de foret ; un ensemble d'axe U d'acheminement de foret étant disposé sur l'ensemble d'axe A d'angle d'oscillation de foret; un ensemble broche électrique (10) étant disposé sur l'ensemble d'axe U d'acheminement de foret ; un foret étant disposé sur l'ensemble broche électrique (10) ; l'ensemble d'axe X de positionnement de foret étant configuré pour mettre en œuvre le positionnement du foret et d'une pièce (7) dans une direction de diamètre de la pièce (7) ; l'ensemble d'axe A d'angle d'oscillation de foret étant configuré pour commander un angle d'oscillation du foret ; l'ensemble d'axe U d'acheminement de foret étant configuré pour mettre en œuvre l'acheminement du foret et commander une profondeur de perçage ; **caractérisée en ce que** la plateforme de travail de perçage de moule pour pneu comprend en outre : un ensemble d'axe Z de déplacement de pièce étant en outre disposé sur la base (3) ; un ensemble d'axe C de rotation de pièce étant disposé sur l'ensemble d'axe Z de déplacement de pièce ; dans laquelle l'ensemble d'axe Z de déplacement de pièce est configuré pour mettre en œuvre le positionnement de la pièce (7) et du foret dans une direction axiale de la pièce (7) ; la plateforme de travail de perçage de moule pour pneu comprenant en outre : un ensemble mandrin (6) utilisé pour installer la pièce (7) étant disposé sur l'ensemble d'axe C de rotation de pièce ; et dans laquelle l'ensemble d'axe C de rotation de pièce est configuré pour mettre en œuvre le positionnement de la pièce (7) et du foret dans une direction circonférentielle de la pièce (7).

2. Plateforme de travail de perçage de moule pour pneu selon la revendication 1, dans laquelle l'ensemble d'axe X de positionnement de foret comprend un chariot d'axe X (15), un ensemble rail de guidage d'axe X (16) et un ensemble vis-mère d'axe X (17) ; l'ensemble rail de guidage d'axe X (16) est disposé sur la base (3) ; le chariot d'axe X (15) est relié de manière coulissante à l'ensemble rail de guidage d'axe X (16) ; le chariot d'axe X (15) est relié à un écrou de vis-mère de l'ensemble vis-mère d'axe X (17) ; et l'ensemble vis-mère d'axe X (17) peut entraîner le chariot d'axe X (15) pour qu'il coulisse le long de l'ensemble rail de guidage d'axe X (16), de préférence, l'ensemble d'axe A d'angle d'oscillation de foret comprenant une plaque de fixation (121) et une plaque tournante (122) disposée sur la plaque de fixation (121), et la plaque de fixation (121) étant fixée au chariot d'axe X (15).

3. Plateforme de travail de perçage de moule pour pneu selon la revendication 2, dans laquelle l'ensemble d'axe U d'acheminement de foret comprend un chariot d'axe U (13), un ensemble rail de guidage d'axe U (14) et un ensemble vis-mère d'axe U (19) ; l'ensemble rail de guidage d'axe U (14) est disposé sur la plaque tournante (122) ; le chariot d'axe U (13) est relié de manière coulissante à l'ensemble rail de guidage d'axe U (14) ; le chariot d'axe U (13) est relié à un écrou de vis-mère de l'ensemble vis-mère d'axe U (19) ; et l'ensemble vis-mère d'axe U (19) peut entraîner le chariot d'axe U (13) pour qu'il coulisse le long de l'ensemble rail de guidage d'axe U (14).

4. Plateforme de travail de perçage de moule pour pneu selon la revendication 1, dans laquelle l'ensemble d'axe Z de déplacement de pièce comprend un chariot d'axe Z, un ensemble rail de guidage d'axe Z (2) et un ensemble vis-mère d'axe Z (1) ; l'ensemble rail de guidage d'axe Z (1) est disposé sur la base (3) ; le chariot d'axe Z est relié de manière coulissante à l'ensemble rail de guidage d'axe Z (2) ; le chariot d'axe Z est relié à un écrou de vis-mère de l'ensemble vis-mère d'axe Z (1) ; et l'ensemble vis-mère d'axe Z (1) peut entraîner le chariot d'axe Z pour qu'il coulisse le long de l'ensemble rail de guidage d'axe Z (2).

5. Plateforme de travail de perçage de moule pour pneu selon la revendication 4, dans laquelle l'ensemble d'axe C de rotation de pièce comprend une table de rotation d'axe C (5) et un ensemble mandrin (6) ; une base de mandrin de l'ensemble mandrin (6) est fixée à la table de rotation d'axe C (5) ; la table de rotation d'axe C (5) est fixée au chariot d'axe Z, et suit le chariot d'axe Z pour se déplacer ; et l'ensemble mandrin (6) entraîne, par le biais d'un moteur, la rotation de la pièce (7), pour mettre en œuvre le positionnement de la pièce (7) et du foret dans la direction circonférentielle de la pièce (7).

6. Plateforme de travail de perçage de moule pour pneu selon la revendication 3, dans laquelle l'ensemble broche électrique (10) est disposé sur le chariot d'axe U (13) ; un ensemble de serrage étant disposé sur l'ensemble broche électrique (10) ; dans laquelle le foret est disposé sur l'ensemble de serrage ; une partie supérieure de l'ensemble broche électrique (10) étant en outre reliée à un bras coulissant suiveur (11) ; une extrémité qui est proche de la pièce (7) et qui est du bras coulissant suiveur (11) étant pourvue d'un dispositif de guidage de foret (8) ; et dans laquelle le dispositif de guidage de foret (8) est configuré pour guider le foret, de préférence, la base (3) étant pourvue d'un dispositif de guidage de morceau de fer (18), et dans laquelle il y a deux dispositifs de guidage de morceau de fer (18).

7. Plateforme de travail de perçage de moule pour pneu selon la revendication 6, dans laquelle l'ensemble broche électrique (10) comprend une broche électrique (102) et un siège de broche (103), dans laquelle le siège de broche (103) est reliée à demeure au chariot d'axe U (13) ; la broche électrique (102) est reliée à demeure au siège de broche (103); le bras coulissant suiveur (11) est relié de manière coulissante au siège de broche (103); le dispositif de guidage de foret (8) comprend une base de manchon de guidage (81) et un manchon de guidage (82) ; le siège de manchon de guidage est disposé à une position qui est dans le bras coulissant suiveur (11) et qui correspond au foret (901), un manchon de guidage (82) pour guider le foret (901) est emmanché dans le siège de manchon de guidage et une extrémité extérieure du manchon de guidage (82) s'étendant à l'extérieur du siège de manchon de guidage, et un trou de guidage associé au foret (901) est disposé à l'intérieur du manchon de guidage (82).

8. Plateforme de travail de perçage de moule pour pneu selon la revendication 7, comprenant en outre un dispositif de compression de manchon de guidage (821), dans laquelle le dispositif de compression de manchon de guidage (821) comprend un cylindre (8211), un clapet cinq voies deux positions (8212), un réservoir d'air (8213) et un dispositif de régulation de pression (8214) ; le bras coulissant suiveur (11) est relié de manière coulissante au siège de broche (103) ; le cylindre (8211) est fixé à une partie supérieure du siège de broche (103), et une direction axiale d'une tige de piston du cylindre (8211) est parallèle à une direction axiale du foret (901) ; une extrémité libre de la tige de piston du cylindre (8211) est en liaison filetée avec une tête sphérique de cylindre (8215) ; la tête sphérique de cylindre (8215) peut être en contact avec un siège avant (8216) disposé sur le bras coulissant suiveur (11) ; une extrémité d'entrée d'air du réservoir d'air (8213) est utilisée pour être reliée à une source d'air comprimé ; une extrémité de sortie d'air du réservoir d'air (8213) est reliée à une entrée d'air du clapet cinq voies deux positions (8212) ; deux sorties d'air du clapet cinq voies deux positions (8212) sont respectivement reliées à une cavité sans tige et à une cavité à tige du cylindre (8211) ; deux orifices d'échappement du clapet cinq voies deux positions (8212) communiquent chacun avec l'air ; le dispositif de régulation de pression (8214) est disposé sur une conduite reliant le réservoir d'air (8213) à la source d'air comprimé; et un clapet unidirectionnel (8217) qui amène l'air provenant de la source d'air à s'écouler de manière unidirectionnelle dans le réservoir d'air (8213) est disposé sur une conduite entre le réservoir d'air (8213) et le dispositif de régulation de pression (8214), de préférence, un FRL de source d'air (8218) est disposé sur une conduite reliant le dispositif de régulation de pression (8214) à la source d'air comprimé, et un clapet de limitation d'écoulement est disposé dans chacune d'une conduite reliant le clapet cinq voies deux positions (8212) à la cavité sans tige du cylindre (8211) et d'une conduite reliant le clapet cinq voies deux positions (8212) à la cavité à tige du cylindre (8211).

9. Plateforme de travail de perçage de moule pour pneu selon la revendication 7, dans laquelle le bras coulissant suiveur (11) forme une liaison coulissante avec le siège de broche (103) en utilisant un rail de guidage de bras coulissant (111) ; un siège de réglage de vis (1031) étant en outre fixé au siège de broche (103) ; le siège de réglage de vis (1031) étant en liaison filetée avec une barre de réglage de limitation (1032) ; une direction axiale de la barre de réglage de limitation (1032) est parallèle à une direction axiale du foret (901) ; un siège de support (112) étant fixé au bras coulissant suiveur (11) ; le siège de support (112) étant pourvu d'un bloc oscillant de limitation (113) ; et le bloc oscillant de limitation (113) et le siège de support (112) forment une liaison rotative parallèle à la direction axiale de la barre de réglage de limitation (1032).

10. Plateforme de travail de perçage de moule pour pneu selon la revendication 7, comprenant en outre un commutateur de proximité haute-fréquence (1024), dans laquelle le commutateur de proximité haute-fréquence (1024) est installé sur une base de commutateur (1025) fixée au siège de broche (103) ; la broche électrique (102) comprend un boîtier de broche (1021) et un arbre rotatif de broche (1022) ; le boîtier de broche entraîne la rotation de l'arbre rotatif de broche (1022) ; l'arbre rotatif de broche (1022) est pourvu d'une encoche de détection (1023) ; une surface de détection du commutateur de proximité haute-fréquence (1024) pénètre à travers le boîtier de broche (1021) et peut être positive par rapport à l'encoche de détection (1023) ; et un système de commande de la plateforme de travail de perçage de moule pour pneu commande le démarrage/arrêt du boîtier de broche (1021) et est en liaison de signal avec le commutateur de proximité haute-fréquence (1024), pour surveiller une vitesse de rotation de l'arbre rotatif de broche (1022).

11. Plateforme de travail de perçage de moule pour pneu selon la revendication 10, dans laquelle une extrémité avant et une extrémité arrière du boîtier de broche (1021) sont respectivement pourvues d'un cache d'extrémité avant (10211) et d'un cache d'extrémité arrière, le cache d'extrémité avant (10211) est intérieurement pourvu d'un trou intérieur de cache d'extrémité avant, le cache d'extrémité arrière est intérieurement pourvu d'un trou intérieur de cache d'extrémité arrière, l'arbre rotatif de broche (1022) pénètre librement à travers le trou intérieur de cache d'extrémité avant et le trou intérieur de cache d'extrémité arrière, et l'arbre rotatif de broche (1022) pénètre à travers une extrémité du cache d'extrémité avant (10211) pour installer le foret (901) ; une première rainure annulaire (10212) est disposée dans une direction circonférentielle d'une paroi latérale du trou intérieur de cache d'extrémité avant, une paroi latérale du trou intérieur de cache d'extrémité avant à l'extérieur de la première rainure annulaire (10212) et l'arbre rotatif de broche (1022) forment un premier espace annulaire externe (10213), et une paroi latérale du trou intérieur de cache d'extrémité avant à l'intérieur de la première rainure annulaire (10212) et l'arbre rotatif de broche (1022) forment un premier espace annulaire intérieur (10214) ; une seconde rainure annulaire est disposée dans une direction circonférentielle d'une paroi latérale du trou intérieur de cache d'extrémité arrière, une paroi latérale du trou intérieur de cache d'extrémité arrière à l'extérieur de la seconde rainure annulaire et l'arbre rotatif de broche (1022) forment un second espace annulaire externe, et une paroi latérale du trou intérieur de cache d'extrémité arrière à l'intérieur de la seconde rainure annulaire et l'arbre rotatif de broche (1022) forment un second espace annulaire intérieur ; et le boîtier de broche (1021) est pourvu d'un canal d'air (10215) ; deux extrémités du canal d'air (10215) communiquent respectivement avec la première rainure annulaire (10212) et la seconde rainure annulaire, et le canal d'air (10215) est relié à de l'air comprimé sec provenant de l'extérieur, de préférence, une profondeur radiale du premier espace annulaire intérieur (10214) étant inférieure à celle du premier espace annulaire externe (10213), et une profondeur radiale du second espace annulaire intérieur étant inférieure à celle du second espace annulaire externe.

12. Plateforme de travail de perçage de moule pour pneu selon la revendication 10, dans laquelle un canal de liquide de refroidissement de broche est disposé à l'intérieur de l'arbre rotatif de broche (1022) le long d'une direction axiale, un canal de liquide de refroidissement de foret communiquant avec le canal de liquide de refroidissement de broche est disposé à l'intérieur du foret (901) le long d'une direction axiale, et le foret (901) est pourvu d'un trou traversant de liquide de refroidissement communiquant avec le canal de liquide de refroidissement de foret ; une extrémité arrière de la broche électrique (102) est reliée à un système de surveillance dynamique de pression de refroidissement ; le système de surveillance dynamique de pression de refroidissement comprend un capteur de pression (104) et une pompe à huile quantitative ; une entrée d'huile de la pompe à huile quantitative est utilisée pour être reliée à une source d'huile de refroidissement ; une sortie d'huile de la pompe à huile quantitative est reliée à la broche électrique (102) en utilisant un raccord rotatif de broche, et le raccord rotatif de broche communique avec le canal de liquide de refroidissement de broche et la sortie d'huile de la pompe à huile quantitative ; et le capteur de pression (104) est relié à une conduite reliant la pompe à huile quantitative et la broche électrique (102), et le capteur de pression (104) est en liaison de signal avec le système de commande de la plateforme de travail de perçage de moule pour pneu.

13. Machine-outil à commande numérique de perçage de moule pour pneu, comprenant la plateforme de travail de perçage de moule pour pneu selon l'une quelconque des revendications 1 à 12.

14. Machine-outil à commande numérique de perçage de moule pour pneu selon la revendication 13, comprenant en outre une protection de plaque métallique et un cadre, dans laquelle le cadre est disposé sous une base (3) et supporte la plateforme de travail de perçage de moule pour pneu ; la protection de plaque métallique recouvre la plateforme de travail de perçage de moule pour pneu et le cadre ; et un séparateur de collecte et de purification de brouillard d'huile est disposé sur une surface supérieure intérieure de la protection de plaque métallique.

15. Procédé d'usinage de trou d'aération de moule pour pneu, dans lequel la machine-outil à commande numérique de perçage de moule pour pneu selon l'une ou l'autre des revendications 13 et 14 est utilisée pour usiner des trous d'aération d'un moule pour pneu, un ensemble broche électrique (10) comprenant une broche électrique (102) et un siège de broche (103) ; le siège de broche (103) étant relié à demeure à un chariot d'axe u (13) ; dans lequel la broche électrique (102) est reliée à demeure au siège de broche (103) ; un bras coulissant suiveur (11) étant relié de manière coulissante au siège de broche (103) ; un siège de manchon de guidage étant disposé à une position qui est dans le bras coulissant suiveur (11) et qui correspond à un foret (901) ; un manchon de guidage (82) pour guider le foret (901) étant emmanché dans le siège de manchon de guidage, et un trou de guidage associé au foret (901) est disposé à l'intérieur du manchon de guidage (82) ; et le procédé comprend les étapes suivantes :
étape 1. Usinage d'une rainure de positionnement (71) pour chaque trou d'aération correspondant sur une surface extérieure du moule pour pneu, dans lequel une surface inférieure de la rainure de positionnement (71) est perpendiculaire à un axe d'un trou d'aération à usiner ; et
étape 2. Fixation d'une surface d'extrémité extérieure du manchon de guidage (82) à la surface inférieure de la rainure de positionnement (71), et action d'amener le foret (801) à percer un trou depuis une surface extérieure du moule pour pneu jusqu'à un intérieur du moule pour pneu afin d'obtenir un trou d'aération.
